(19) Europäisches Patentamt
European Patent Office
Office européen des brevets

(11) EP 4 481 876 B1

# (12) EUROPEAN PATENT SPECIFICATION

(45) Date of publication and mention of the grant of the patent:
**21.01.2026 Bulletin 2026/04**

(21) Application number: **23847036.3**

(22) Date of filing: **28.07.2023**

(51) International Patent Classification (IPC):
***H01M 10/0567*** *(2010.01)* ***H01M 10/052*** *(2010.01)*
***H01M 4/48*** *(2010.01)* ***H01M 10/0525*** *(2010.01)*
***H01M 10/0568*** *(2010.01)* ***H01M 10/0569*** *(2010.01)*
***H01M 4/38*** *(2006.01)*

(52) Cooperative Patent Classification (CPC):
**H01M 10/052; H01M 4/386; H01M 4/48; H01M 4/483; H01M 10/0525; H01M 10/0567; H01M 10/0568; H01M 10/0569;** H01M 2300/0037; Y02E 60/10

(86) International application number:
**PCT/KR2023/011017**

(87) International publication number:
**WO 2024/025380 (01.02.2024 Gazette 2024/05)**

## (54) NON-AQUEOUS ELECTROLYTE SOLUTION AND LITHIUM SECONDARY BATTERY INCLUDING THE SAME

NICHTWÄSSRIGE ELEKTROLYTLÖSUNG UND LITHIUMSEKUNDÄRBATTERIE DAMIT

SOLUTION ÉLECTROLYTIQUE NON AQUEUSE ET BATTERIE SECONDAIRE AU LITHIUM COMPRENANT LADITE SOLUTION

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **28.07.2022 KR 20220094116**

(43) Date of publication of application:
**25.12.2024 Bulletin 2024/52**

(73) Proprietor: **LG Chem, Ltd.**
**Yeongdeungpo-gu**
**Seoul 07336 (KR)**

(72) Inventors:
- **KIM, Ki Cheol**
  **Daejeon 34122 (KR)**
- **OH, Mi Yeon**
  **Daejeon 34122 (KR)**
- **LEE, Won Kyun**
  **Daejeon 34122 (KR)**
- **NOH, Chan Woo**
  **Daejeon 34122 (KR)**
- **CHUNG, Se Young**
  **Daejeon 34122 (KR)**
- **KIM, Jae Yoon**
  **Daejeon 34122 (KR)**
- **SHIN, Sung Ho**
  **Daejeon 34122 (KR)**
- **YOON, Jeong Ae**
  **Daejeon 34122 (KR)**
- **KIM, Kyoung Hoon**
  **Daejeon 34122 (KR)**

(74) Representative: **Hoffmann Eitle**
**Patent- und Rechtsanwälte PartmbB**
**Arabellastraße 30**
**81925 München (DE)**

(56) References cited:
**EP-A1- 3 416 229**
**WO-A1-2021/251472**
**WO-A1-2021/251472**
**CN-A- 101 820 082**
**CN-A- 101 820 082**
**CN-A- 103 012 462**
**KR-A- 20170 047 656**
**KR-A- 20170 047 656**
**KR-A- 20210 013 779**
**KR-A- 20210 013 779**
**US-A1- 2002 076 619**
**US-A1- 2002 076 619**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

## Description

## TECHNICAL FIELD

Cross-reference to Related Applications

This application claims priority from Korean Patent Application No. 10-2022-0094116, filed on July 28, 2022.

Technical Field

The present invention relates to a non-aqueous electrolyte solution including a silane-based compound and a lithium secondary battery including the same.

## BACKGROUND ART

Recently, demand for a secondary battery having high stability as well as high capacity and high output is increasing as an application area of lithium secondary batteries is rapidly expanding not only to electricity, electronics, communication, and power supply of electronic devices such as computers, but also to power storage and supply of automobiles or large-area devices such as power storage devices.

After a positive electrode and a negative electrode are prepared by coating materials, in which a positive electrode active material formed of a lithium-containing transition metal oxide or a carbon-based or silicon-based negative electrode active material capable of intercalating and deintercalating lithium ions is mixed with optionally a binder and a conductive agent, on a positive electrode collector and a negative electrode collector, respectively, and are stacked on both sides of a separator to form an electrode assembly having a predetermined shape, a lithium secondary battery is generally prepared by inserting the electrode assembly and a non-aqueous electrolyte solution into a battery case. Herein, in order to secure performance of the battery, the battery is almost inevitably subjected to formation and aging processes.

The formation process is a step of activating the secondary battery by repeating charge and discharge after battery assembly, wherein lithium ions from the lithium-containing transition metal oxide used as the positive electrode during the charge move to the carbon negative electrode active material used as the negative electrode and are intercalated thereinto. In this case, the highly reactive lithium ions react with an electrolyte to form a compound, such as $Li_2CO_3$, $Li_2O$, and LiOH, and these compounds form a solid electrolyte interface (SEI) layer on a surface of the electrode. Since the SEI layer closely affects lifetime and capacity maintenance, the formation of the SEI layer is an important factor.

Recently, high capacity, high output, and long-term life characteristics are becoming important particularly in lithium secondary batteries for automobiles. Since a positive electrode active material having high energy density but low stability is used to increase capacity in an aspect of the positive electrode, formation of an active material-electrolyte interface capable of stabilizing the positive electrode active material by protecting a surface of the positive electrode active material is accordingly required, and, in an aspect of the negative electrode, since problems, in which surface species of the negative electrode are decomposed in the electrolyte solution to cause a side reaction, have been reported, there is a need to form a robust and low-resistance SEI layer. Also, since the SEI layer may be gradually collapsed during storage at high temperature to cause problems such as electrode exposure, attempts have been made to develop an additive in the electrolyte solution which helps to form the SEI layer that may suppress a side reaction during high-temperature storage.

As described above, as high-temperature operation and long-term life characteristics become important for the lithium secondary batteries, an electrolyte decomposition reaction due to a redox reaction occurring at an interface between the electrolyte and the electrode is accumulated during repeated cycles, and, due to this increased resistance, a problem of degrading life characteristics is accompanied. Patent Literature EP3416229A1 discloses an electrolyte comprising a compound similar to Formula I and a compound according to Formula II and III.

## DISCLOSURE OF THE INVENTION

## TECHNICAL PROBLEM

An aspect of the present invention provides a non-aqueous electrolyte solution, which may improve high-temperature stability and life characteristics of a lithium secondary battery by forming a stable and low-resistance electrode-electrolyte interface even at high temperatures, and a lithium secondary battery including the same.

## TECHNICAL SOLUTION

In order to solve the above-described tasks, the present invention provides a non-aqueous electrolyte solution and a lithium secondary battery.

(1) The present invention provides a non-aqueous electrolyte solution including an organic solvent; a lithium salt; a compound represented by Formula I; and at least one selected from compounds represented by Formula II to Formula V.

[Formula I]

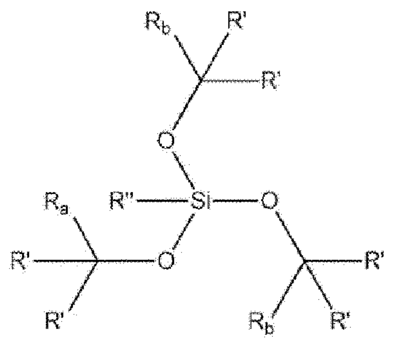

[Formula II]

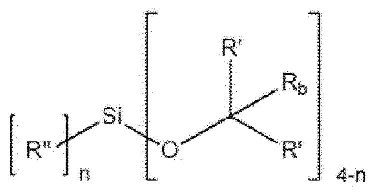

[Formula III]

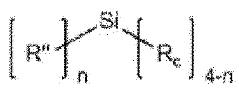

[Formula IV] $Si(R'')_4$

[Formula V]

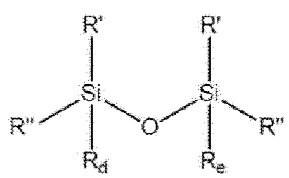

In Formula I to Formula V,

$R_a$ is a $C_1$-$C_{10}$ alkyl group substituted with at least one fluorine element,
$R_b$ is each independently a $C_1$-$C_{10}$ alkyl group unsubstituted or substituted with at least one fluorine element,

$R_c$ is each independently an unsubstituted or substituted $C_1$-$C_{10}$ alkyl group,
R' is each independently hydrogen; an unsubstituted or substituted $C_1$-$C_{10}$ alkyl group; or an unsubstituted or substituted $C_1$-$C_{10}$ heteroalkyl group,
R" is an unsubstituted or substituted $C_2$-$C_{10}$ alkenyl group; or an unsubstituted or substituted $C_2$-$C_{10}$ alkynyl group,
$R_d$ and $R_e$ are each independently hydrogen; an unsubstituted or substituted $C_1$-$C_{10}$ alkyl group; an unsubstituted or substituted $C_1$-$C_{10}$ heteroalkyl group; or an unsubstituted or substituted siloxane group,
wherein, in a case in which both $R_d$ and $R_e$ are siloxane groups, $R_d$ and $R_e$ may be connected to each other to form a ring composed of a siloxane bond, and
n is 2 or 3.

(2) The present invention provides the non-aqueous electrolyte solution of (1) above, wherein the compound represented by Formula I is at least one compound selected from compounds of Formulae I-a to I-f.

[Formula I-a]

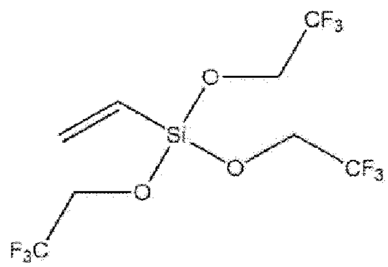

[Formula I-b]

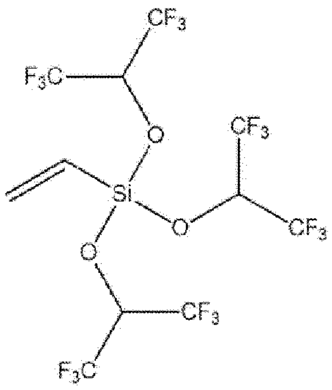

[Formula I-c]

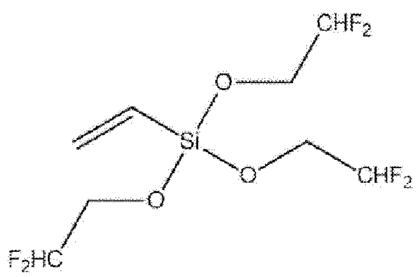

[Formula I-d]

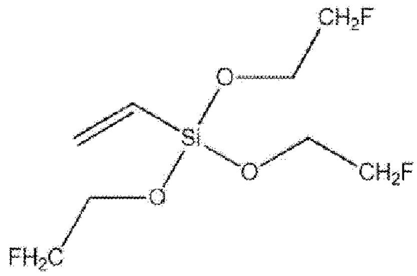

[Formula I-e]

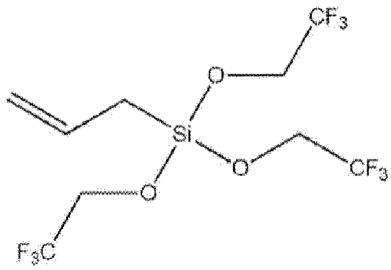

[Formula I-f]

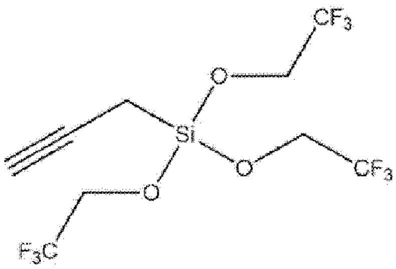

(3) The present invention provides the non-aqueous electrolyte solution of (1) or (2) above, wherein the compound represented by Formula II is at least one compound selected from compounds of Formulae II-a to II-f.

[Formula II-a]

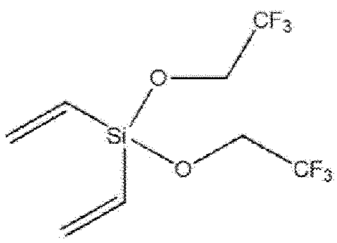

[Formula II-b]

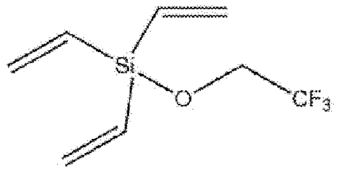

[Formula II-c]

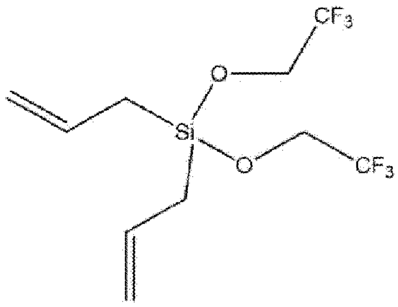

[Formula II-d]

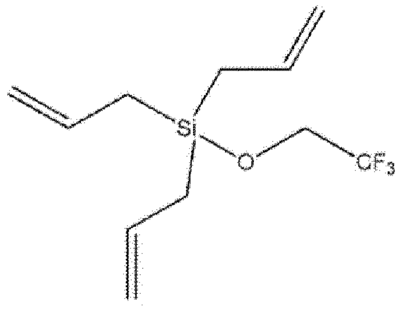

[Formula II-e]

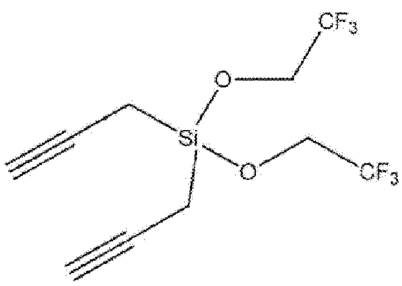

[Formula II-f]

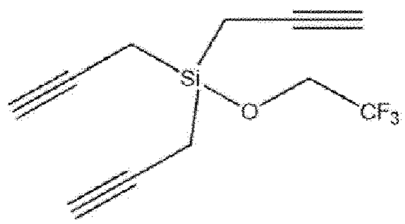

(4) The present invention provides the non-aqueous electrolyte solution of any one of (1) to (3) above, wherein the compound represented by Formula III is at least one compound selected from compounds of Formulae III-a to III-o.

[Formula III-a]

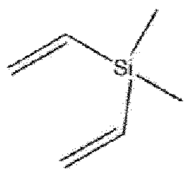

[Formula III-b]

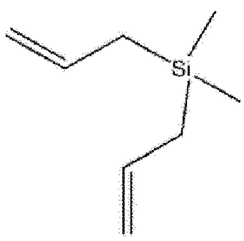

[Formula III-c]

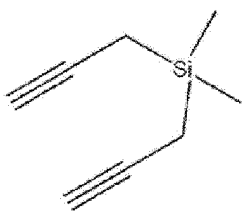

[Formula III-d]

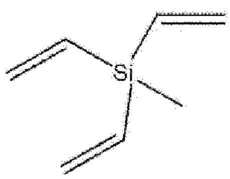

[Formula III-e]

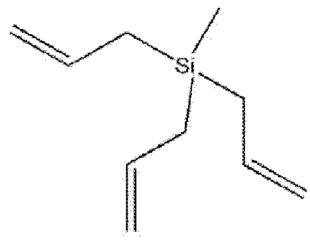

[Formula III-f]

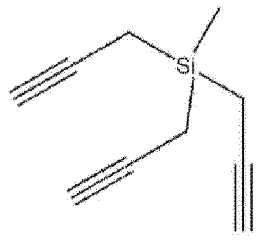

[Formula III-g]

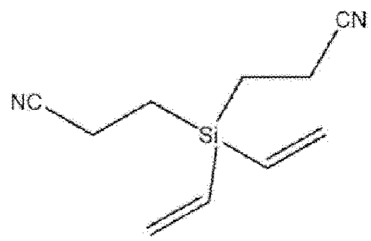

[Formula III-h]

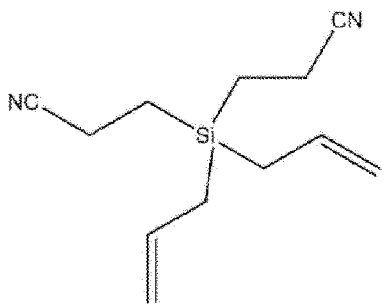

[Formula III-i]

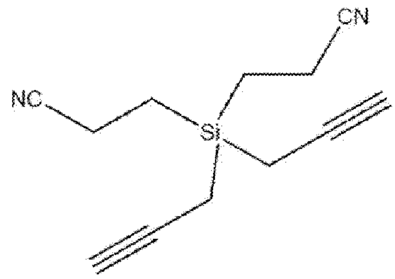

[Formula III-j]

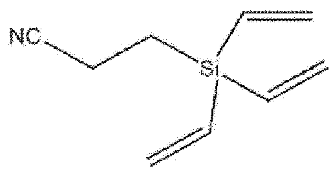

[Formula III-k]

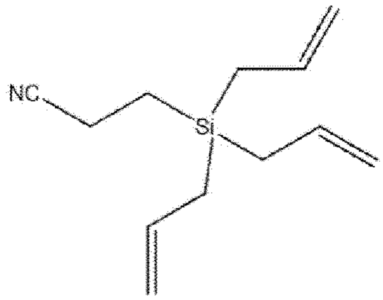

[Formula III-l]

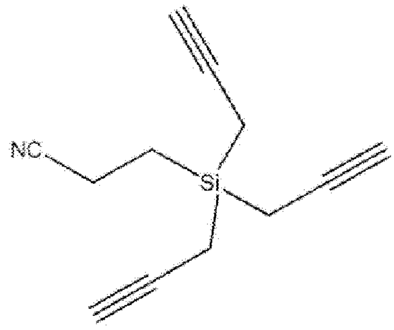

[Formula III-m]

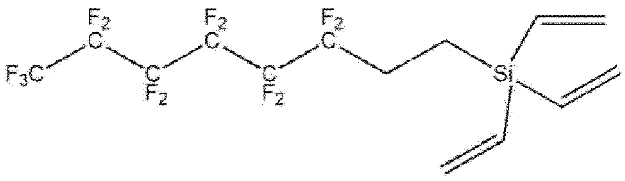

[Formula III-n]

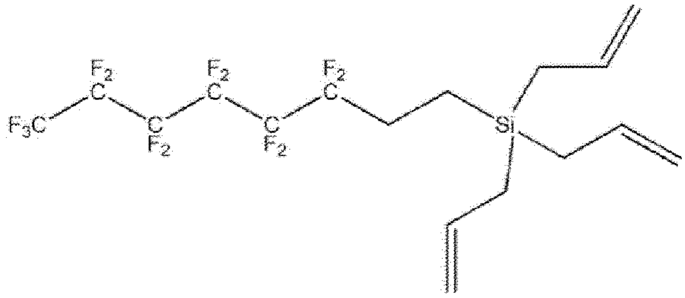

[Formula III-o]

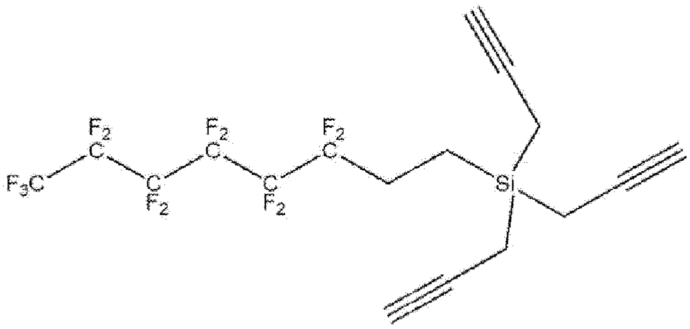

(5) The present invention provides the non-aqueous electrolyte solution of any one of (1) to (4) above, wherein the compound represented by Formula IV is at least one compound selected from compounds of Formulae IV-a to IV-c.

[Formula IV-a]

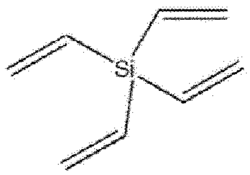

[Formula IV-b]

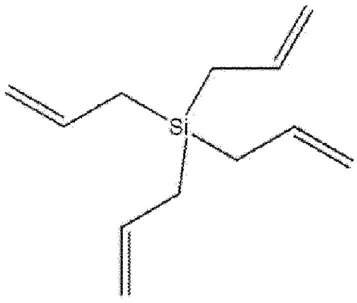

[Formula IV-c]

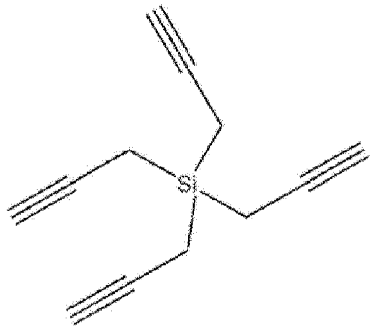

(6) The present invention provides the non-aqueous electrolyte solution of any one of (1) to (5) above, wherein the compound represented by Formula V is at least one compound selected from compounds of Formulae V-a and V-b.

[Formula V-a]

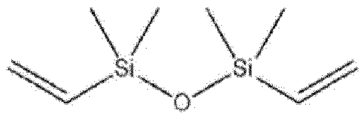

[Formula V-b]

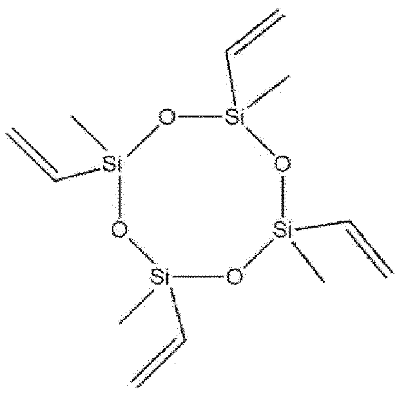

(7) The present invention provides the non-aqueous electrolyte solution of any one of (1) to (6) above, wherein a weight ratio of the compound represented by Formula I to the at least one selected from the compounds represented by Formula II to Formula V is in a range of 1:1 to 100:1.

(8) The present invention provides the non-aqueous electrolyte solution of any one of (1) to (7) above, wherein the compound represented by Formula I is included in an amount of 0.01 part by weight to 10 parts by weight based on 100 parts by weight of the non-aqueous electrolyte solution.

(9) The present invention provides the non-aqueous electrolyte solution of any one of (1) to (8) above, wherein the at least one selected from the compounds represented by Formula II to Formula V is included in an amount of 0.01 part by weight to 10 parts by weight based on 100 parts by weight of the non-aqueous electrolyte solution.

(10) The present invention provides a lithium secondary battery which includes a positive electrode including a positive electrode active material; a negative electrode including a negative electrode active material; a separator disposed between the positive electrode and the negative electrode; and the non-aqueous electrolyte solution of any one of (1) to (9) above.

(11) The present invention provides the lithium secondary battery of (10) above, wherein the negative electrode active material is a silicon-based negative electrode active material.

## ADVANTAGEOUS EFFECTS

In a case in which the compound represented by Formula I which is a silane-based compound; and at least one selected from the compounds represented by Formula II to Formula V are simultaneously included as an additive in a non-aqueous electrolyte solution as in the present invention, since a thin and stable solid electrolyte interface (SEI) layer is formed, a lithium secondary battery with excellent high-temperature stability and life characteristics may be provided.

## MODE FOR CARRYING OUT THE INVENTION

Hereinafter, the present invention will be described in more detail.

It will be understood that words or terms used in the specification and claims shall not be interpreted as the meaning defined in commonly used dictionaries. It will be further understood that the words or terms should be interpreted as having a meaning that is consistent with their meaning in the context of the relevant art and the technical idea of the invention, based on the principle that an inventor may properly define the meaning of the words or terms to best explain the invention.

The terminology used herein is for the purpose of describing specific embodiments only and is not intended to be limiting of the present invention. In the specification, the terms of a singular form may include plural forms unless referred to the contrary. In the present invention, it will be further understood that the terms 'include,' or 'have' when used in this specification, specify the presence of stated features, numbers, steps, elements, or combinations thereof, but do not preclude the presence or addition of one or more other features, numbers, steps, elements, or combinations thereof.

### Non-aqueous Electrolyte Solution

The present invention provides a non-aqueous electrolyte solution including an organic solvent; a lithium salt; a compound represented by Formula I; and at least one selected from compounds represented by Formula II to Formula V.

[Formula I]

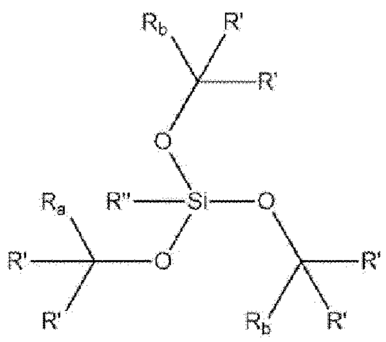

[Formula II]

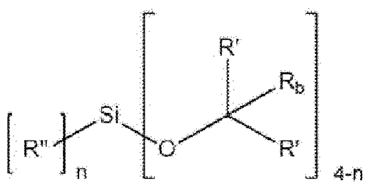

[Formula III]

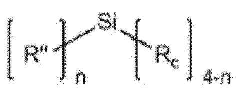

[Formula IV] $Si(R'')_4$

[Formula V]

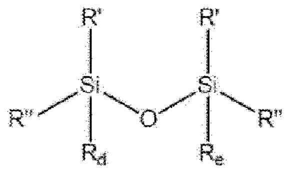

In Formula I to Formula V,

$R_a$ is a $C_1$-$C_{10}$ alkyl group substituted with at least one fluorine element,
$R_b$ is each independently a $C_1$-$C_{10}$ alkyl group unsubstituted or substituted with at least one fluorine element,
$R_c$ is each independently an unsubstituted or substituted $C_1$-$C_{10}$ alkyl group,
R' is each independently hydrogen; an unsubstituted or substituted $C_1$-$C_{10}$ alkyl group; or an unsubstituted or substituted $C_1$-$C_{10}$ heteroalkyl group,
R" is an unsubstituted or substituted $C_2$-$C_{10}$ alkenyl group; or an unsubstituted or substituted $C_2$-$C_{10}$ alkynyl group,
$R_d$ and $R_e$ are each independently hydrogen; an unsubstituted or substituted $C_1$-$C_{10}$ alkyl group; an unsubstituted or substituted $C_1$-$C_{10}$ heteroalkyl group; or an unsubstituted or substituted siloxane group,
wherein, in a case in which both $R_d$ and $R_e$ are siloxane groups, $R_d$ and $R_e$ may be connected to each other to form a ring composed of a siloxane bond, and
n is 2 or 3.

In the present invention, with respect to a substituted alkyl group; a substituted heteroalkyl group; a substituted alkenyl group; a substituted alkynyl group; or a substituted siloxane group, a substituent may be deuterium (-D), a hydroxy group (-OH), an amino group ($-NR_2$), a halogen group (-X), a thiol group (-SR), a cyano group (-CN), a carbonyl group (-C(=O)-H, -C(=O)-R, -C(=O)-OH, $-C(=O)-NR_2$, -C(=O)-OR, -C(=O)-X), a carbamate group ($-O-C(=O)-NR_2$, -NR-C(=O)OR), a urea group ($-N(R)-C(=O)-NR_2$), a carbonate group (-O-C(=O)-OR), an anhydride group (-C(=O)-O-C(=O)-R), an ester group (-O-C(=O)-R), a cyanate group (-OCN), an isocyanate group (-NCO), a thiocyanate group (-SCN), a nitrate group (-O-N(=O)-OR), a sulfonyl group ($-S(=O)_2-R$), a sulfinyl group (-S(=O)-R), phosphite ($-OP(OR)_2$), phosphate ($-OPO(OR)_2$), phosphinate (-PO(OR)R), phosphinite ($-P(OR)R_2$), phosphonate ($-PO_3R_2$), phosphonite ($-P(OR)_2$), boronic acid ($-B(OR)_2$), borate ($-O-B(OR)_2$), borane ($-BR_2$), a siloxane group (-Si-O-Si-R), a silane group ($-SiR_4$), or a linear or branched $C_1$-$C_6$ alkoxy group. In this case, in the above substituents, X is a halogen group, and R may each independently be a $C_1$-$C_{10}$ alkyl group; a $C_2$-$C_{10}$ alkenyl group; or a $C_2$-$C_{10}$ alkynyl group.

### (1) Compound Represented by Formula I; and at Least One Selected from Compounds Represented by Formula II to Formula V

The non-aqueous electrolyte solution according to the present invention includes the compound represented by Formula I which is a silane-based compound; and at least one selected from the compounds represented by Formula II to Formula V as an additive. That is, the non-aqueous electrolyte solution according to the present invention simultaneously includes the compounds represented by Formula I and Formula II, simultaneously includes the compounds represented by Formula I and Formula III, simultaneously includes the compounds represented by Formula I and Formula IV, simultaneously includes the compounds represented by Formula I and Formula V, simultaneously includes the compounds represented by Formula I, Formula II, and Formula III, simultaneously includes the compounds represented by Formula I, Formula II, and Formula IV, simultaneously includes the compounds represented by Formula I, Formula II, and Formula V, simultaneously includes the compounds represented by Formula I, Formula III, and Formula IV, simultaneously includes the compounds represented by Formula I, Formula III, and Formula V, simultaneously includes the compounds represented by Formulae I to IV, simultaneously includes the compounds represented by Formula I, Formula II, Formula III, and Formula V, simultaneously includes the compounds represented by Formula I, Formula II, Formula IV, and Formula V, or may simultaneously include the compounds represented by Formula I, Formula III, Formula IV, and Formula V.

In a case in which the compound represented by Formula I; and the at least one selected from the compounds represented by Formulae II to V are simultaneously included in the non-aqueous electrolyte solution, since a thin and stable solid electrolyte interface (SEI) layer is formed, a lithium secondary battery with excellent high-temperature stability

and life characteristics may be provided. Particularly, in a case in which a silicon-based negative electrode material is used as a negative electrode of the lithium secondary battery, since a thin and stable SEI layer containing not only a siloxane bond but also a carbon-carbon bond is formed, the high-temperature stability and life characteristics of the battery may be further improved.

The compound represented by Formula I may form an SEI layer with better mechanical stiffness against volume changes through formation of a covalent bond ([electrode]-O-Si-O-) with a hydroxyl group (-OH) on a surface of a negative electrode material or positive electrode material. Particularly, when using the silicon-based negative electrode material, a siloxane network may be formed to protect the silicon-based negative electrode which experiences severe volume expansion during charge and discharge. Also, since the compound represented by Formula I includes an unsubstituted or substituted alkenyl group; or an unsubstituted or substituted alkynyl group, it may form an SEI layer in the form of a polymer through formation of a C-C bond by a reduction/oxidation decomposition reaction. In this case, since the compounds represented by Formula II to Formula V include two or more unsubstituted or substituted alkenyl groups; or unsubstituted or substituted alkynyl group, they promote SEI formation efficiency as a crosslinker and, as a result, they may help to form a more robust SEI layer. Through the formation of such a stable SEI layer, they play a role in extending lifetime of the electrode or effectively reducing swelling of the battery which is caused by electrolyte decomposition at high temperatures. Furthermore, since the compounds represented by Formula I and Formula II become a source of fluorine anions during the reduction/oxidation decomposition reaction by including a fluorine element, they play a role in assisting the formation of LiF, a stable inorganic compound included in the SEI layer.

According to the present invention, in Formula I, R, may specifically be a $C_1$-$C_6$ alkyl group substituted with at least one fluorine element, more specifically, a $C_1$-$C_5$ alkyl group substituted with at least one fluorine element.

According to the present invention, in Formula I, $R_b$ may specifically each independently be a $C_1$-$C_{10}$ alkyl group substituted with at least one fluorine element, more specifically, a $C_1$-$C_6$ alkyl group substituted with at least one fluorine element, and may more specifically each independently be a $C_1$-$C_5$ alkyl group substituted with at least one fluorine element.

According to the present invention, in Formula I, R' may specifically each independently be hydrogen; or an unsubstituted or substituted $C_1$-$C_{10}$ alkyl group, more specifically, hydrogen; or a substituted $C_1$-$C_6$ alkyl group, and may more specifically each independently be hydrogen; or a substituted $C_1$-$C_5$ alkyl group. In this case, a substituent may specifically be a fluoro group.

According to the present invention, in Formula I, R" may specifically be an unsubstituted $C_2$-$C_{10}$ alkenyl group; or an unsubstituted $C_2$-$C_{10}$ alkynyl group, more specifically, an unsubstituted $C_2$-$C_6$ alkenyl group; or an unsubstituted $C_2$-$C_6$ alkynyl group, and may more specifically be an unsubstituted $C_2$-$C_5$ alkenyl group; or an unsubstituted $C_2$-$C_5$ alkynyl group.

According to the present invention, the compound represented by Formula I may be at least one compound selected from compounds of Formulae I-a to I-f below.

[Formula I-a]

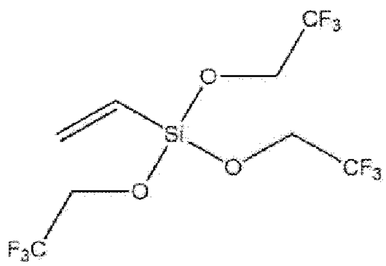

[Formula I-b]

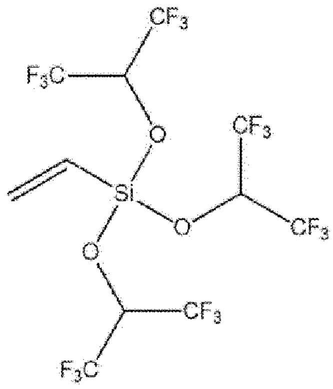

[Formula I-c]

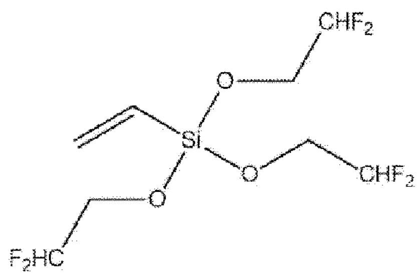

[Formula I-d]

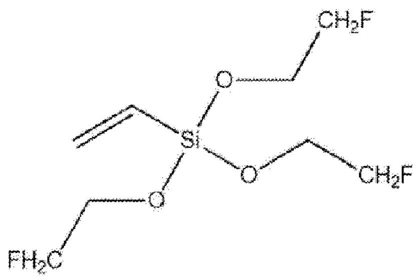

[Formula I-e]

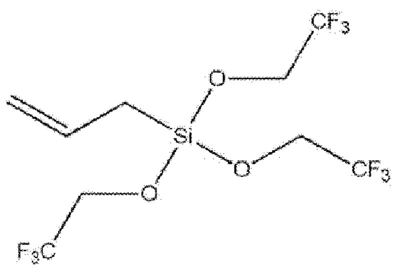

[Formula I-f]

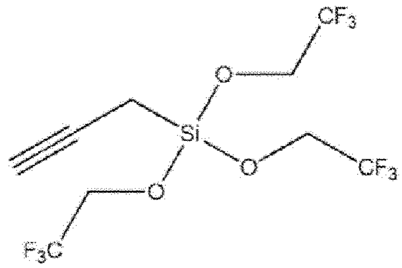

The compound represented by Formula I may be prepared through a reaction of substituting a halogen element of a silane compound containing silicon (Si) directly bonded to the halogen element with alcohol, but the present invention is not limited thereto, and the compound represented by Formula I may be prepared through a known method. For example, as described in Organometallics, 2011, vol.30. #2, p.352 ~ 355, the compound represented by Formula I may also be prepared by a method of introducing an alkyne into a silane compound represented by $SiH(OR)_3$ in the presence of a transition metal catalyst.

According to the present invention, in Formula II, $R_b$ may specifically each independently be a $C_1$-$C_{10}$ alkyl group substituted with at least one fluorine element, more specifically, a $C_1$-$C_6$ alkyl group substituted with at least one fluorine element, and may more specifically each independently be a $C_1$-$C_5$ alkyl group substituted with at least one fluorine element. For example, $R_b$ may be a $C_1$-$C_5$ alkyl group containing a trifluoro group.

According to the present invention, in Formula II, R' may specifically each independently be hydrogen; or an unsubstituted $C_1$-$C_{10}$ alkyl group, more specifically, hydrogen; or an unsubstituted $C_1$-$C_6$ alkyl group, and may more specifically each independently be hydrogen; or an unsubstituted $C_1$-$C_5$ alkyl group.

According to the present invention, in Formula II, R" may specifically be an unsubstituted $C_2$-$C_{10}$ alkenyl group; or an unsubstituted $C_2$-$C_{10}$ alkynyl group, more specifically, an unsubstituted $C_2$-$C_6$ alkenyl group; or an unsubstituted $C_2$-$C_6$ alkynyl group, and may more specifically be an unsubstituted $C_2$-$C_5$ alkenyl group; or an unsubstituted $C_2$-$C_5$ alkynyl group.

According to the present invention, the compound represented by Formula II may be at least one compound selected from compounds of Formulae II-a to II-f below.

[Formula II-a]

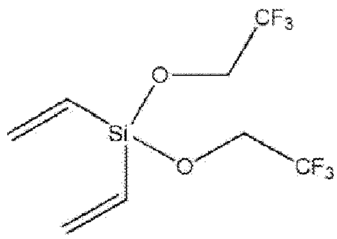

[Formula II-b]

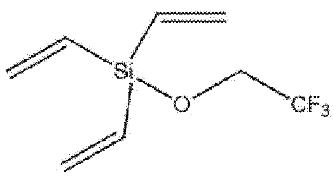

[Formula II-c]

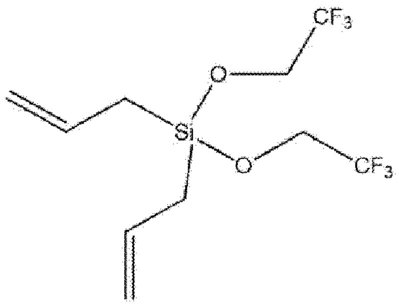

[Formula II-d]

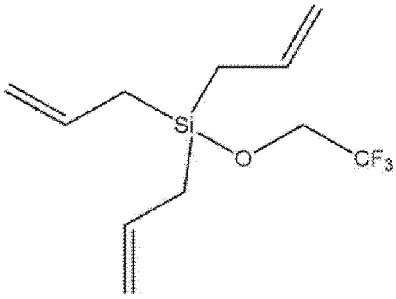

[Formula II-e]

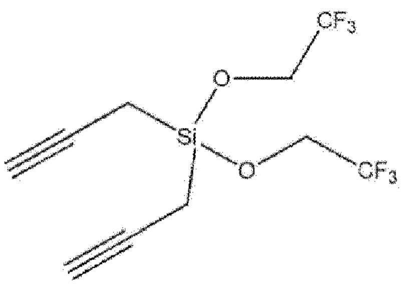

[Formula II-f]

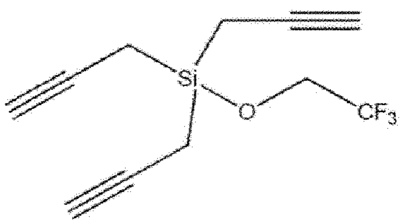

According to the present invention, in Formula III, $R_c$ may specifically each independently be an unsubstituted $C_1$-$C_{10}$ alkyl group; a $C_1$-$C_{10}$ alkyl group substituted with at least one fluorine element; or a $C_1$-$C_{10}$ alkyl group substituted with a cyano group. $R_c$ may more specifically each independently be an unsubstituted $C_1$-$C_6$ alkyl group; a $C_1$-$C_{10}$ alkyl group substituted with at least one fluorine element; or a $C_1$-$C_6$ alkyl group substituted with a cyano group.

According to the present invention, in Formula III, R" may specifically be an unsubstituted $C_2$-$C_{10}$ alkenyl group; or an unsubstituted $C_2$-$C_{10}$ alkynyl group, more specifically, an unsubstituted $C_2$-$C_6$ alkenyl group; or an unsubstituted $C_2$-$C_6$ alkynyl group, and may more specifically be an unsubstituted $C_2$-$C_5$ alkenyl group; or an unsubstituted $C_2$-$C_5$

alkynyl group.

According to the present invention, the compound represented by Formula III may be at least one compound selected from compounds of Formulae III-a to III-o below.

[Formula III-a]

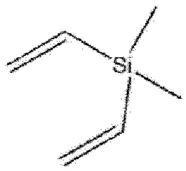

[Formula III-b]

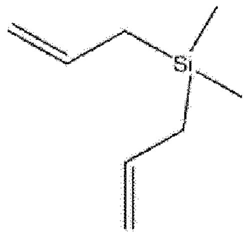

[Formula III-c]

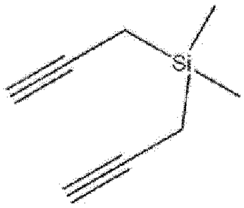

[Formula III-d]

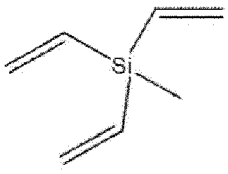

[Formula III-e]

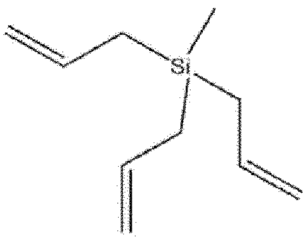

[Formula III-f]

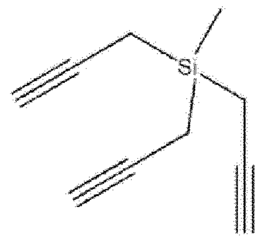

[Formula III-g]

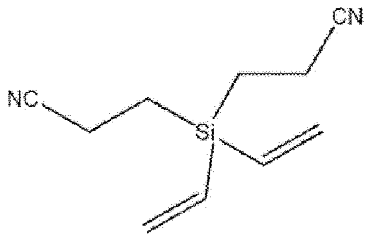

[Formula III-h]

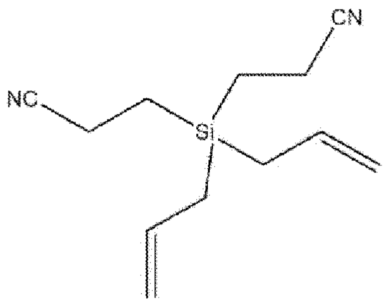

[Formula III-i]

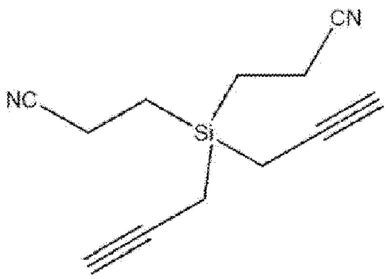

[Formula III-j]

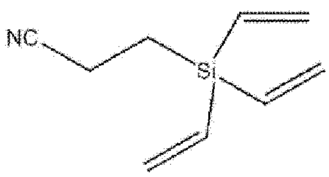

[Formula III-k]

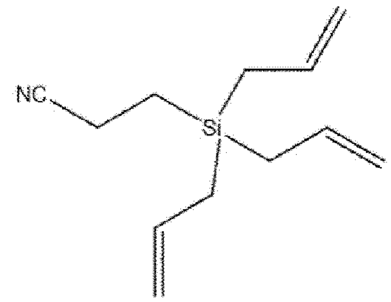

[Formula III-l]

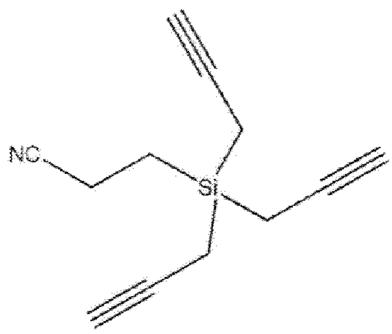

[Formula III-m]

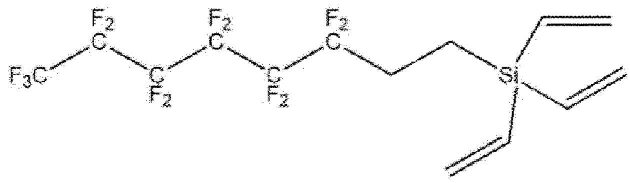

[Formula III-n]

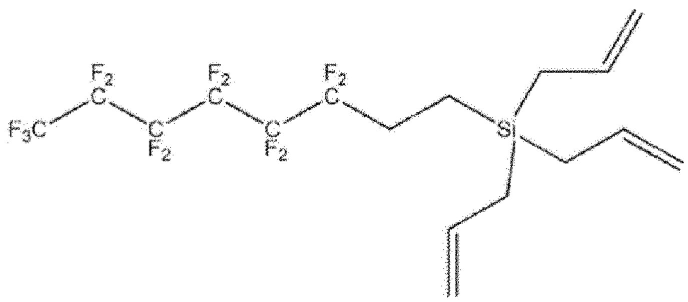

[Formula III-o]

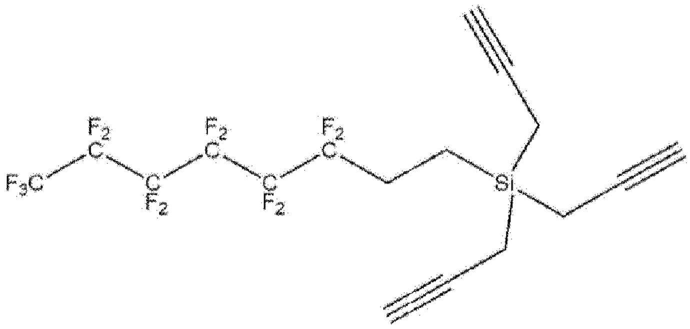

According to the present invention, in Formula IV, R" may specifically be an unsubstituted $C_2$-$C_{10}$ alkenyl group; or an unsubstituted $C_2$-$C_{10}$ alkynyl group, more specifically, an unsubstituted $C_2$-$C_6$ alkenyl group; or an unsubstituted $C_2$-$C_6$ alkynyl group, and may more specifically be an unsubstituted $C_2$-$C_5$ alkenyl group; or an unsubstituted $C_2$-$C_5$ alkynyl group.

According to the present invention, the compound represented by Formula IV may be at least one compound selected from compounds of Formulae IV-a to IV-c below.

[Formula IV-a]

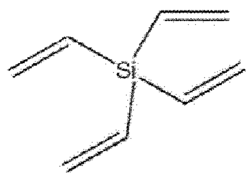

[Formula IV-b]

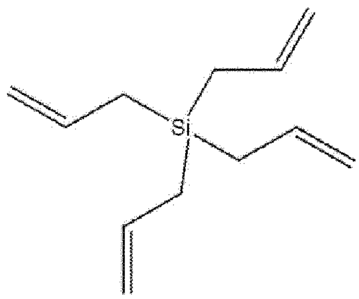

[Formula IV-c]

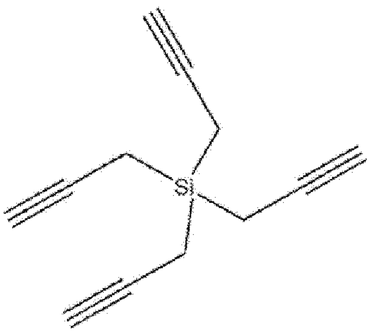

According to the present invention, in Formula V, R' may specifically each independently be hydrogen; or an

unsubstituted $C_1$-$C_{10}$ alkyl group, more specifically, hydrogen; or an unsubstituted $C_1$-$C_6$ alkyl group, and may more specifically each independently be hydrogen; or an unsubstituted $C_1$-$C_5$ alkyl group.

According to the present invention, in Formula V, R" may specifically be an unsubstituted $C_2$-$C_{10}$ alkenyl group; or an unsubstituted $C_2$-$C_{10}$ alkynyl group, more specifically, an unsubstituted $C_2$-$C_6$ alkenyl group; or an unsubstituted $C_2$-$C_6$ alkynyl group, and may more specifically be an unsubstituted $C_2$-$C_5$ alkenyl group; or an unsubstituted $C_2$-$C_5$ alkynyl group.

According to the present invention, in Formula V, $R_d$ and $R_e$ may specifically each independently be hydrogen; an unsubstituted $C_1$-$C_{10}$ alkyl group; a siloxane group substituted with a siloxane group and/or a silane group; or an unsubstituted siloxane group, more specifically, hydrogen; an unsubstituted $C_1$-$C_6$ alkyl group; a siloxane group substituted with a siloxane group and/or a silane group; or an unsubstituted siloxane group, and may more specifically each independently be hydrogen; an unsubstituted $C_1$-$C_5$ alkyl group; a siloxane group substituted with a siloxane group and/or a silane group; or an unsubstituted siloxane group. In a case in which both $R_d$ and $R_e$ are siloxane groups, $R_d$ and $R_e$ may be connected to each other to form a ring composed of a siloxane bond.

According to the present invention, the compound represented by Formula V may be at least one compound selected from compounds of Formulae V-a and V-b below.

[Formula V-a]

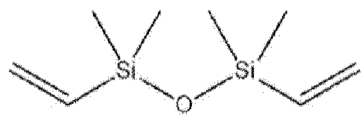

[Formula V-b]

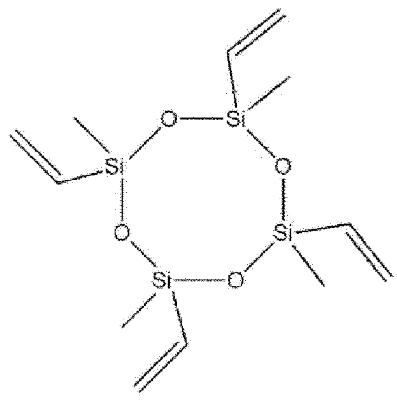

According to the present invention, a weight ratio (A:B) of the compound (A) represented by Formula I to the at least one (B) selected from the compounds represented by Formula II to Formula V may be in a range of 1:1 to 100:1, particularly 1:1 to 50:1, 1:1 to 40:1, 1:1 to 30:1, 1:1 to 20:1, or 1:1 to 10:1, and more particularly 1:1 to 9:1, 1:1 to 8:1, 1:1 to 7:1, 1:1 to 6:1, 1:1 to 5:1, 1:1 to 4:1, 1:1 to 3:1, or 1:1 to 2:1. In this case, since the compound represented by Formula I is present more abundantly than the compounds represented by Formula II to Formula V which act as the crosslinker, a crosslink may be efficiently formed, and thus, an SEI layer with high mechanical stiffness may be formed to improve battery stability.

According to the present invention, the non-aqueous electrolyte solution may include the compound represented by Formula I in an amount of 0.01 part by weight to 10 parts by weight, specifically, 0.01 part by weight to 5 parts by weight, 0.01 part by weight to 1 part by weight, or 0.1 part by weight to 1 part by weight based on 100 parts by weight of the non-aqueous electrolyte solution. Also, the non-aqueous electrolyte solution may include the at least one selected from the compounds represented by Formula II to Formula V in an amount of 0.01 part by weight to 10 parts by weight, specifically, 0.01 part by weight to 5 parts by weight, 0.01 part by weight to 2.5 parts by weight, or 0.1 part by weight to 0.5 part by weight based on 100 parts by weight of the non-aqueous electrolyte solution. In this case, when the non-aqueous electrolyte solution is used in a secondary battery, since the SEI layer, which is derived from the compound represented by Formula I; and the at least one selected from the compounds represented by Formula II and Formula V, has an appropriate thickness so as to facilitate movement of lithium ions and has high mechanical stiffness, stability may be improved and a reduction in capacity of the battery may be prevented by preventing an increase in internal resistance of the secondary battery.

### (2) Organic Solvent

The organic solvent is a non-aqueous solvent commonly used in a lithium secondary battery, wherein the organic solvent is not limited as long as decomposition due to an oxidation reaction during charge and discharge of the secondary battery may be minimized and desired properties may be exhibited together with an additive.

The organic solvent, for example, may be linear carbonate or cyclic carbonate, linear ester or cyclic ester, ether, glyme, or nitrile (acetonitrile, SN, etc.), but is not limited thereto. A carbonate-based electrolyte solution solvent containing a carbonate compound, such as cyclic carbonate, linear carbonate, or a mixture thereof, may be typically used as the organic solvent.

Specific examples of the cyclic carbonate compound are ethylene carbonate (EC), propylene carbonate (PC), 1,2-butylene carbonate, 2,3-butylene carbonate, 1,2-pentylene carbonate, 2,3-pentylene carbonate, vinylene carbonate, and fluoroethylene carbonate (FEC), but the cyclic carbonate compound is not limited thereto.

Specific examples of the linear carbonate compound are dimethyl carbonate (DMC), diethyl carbonate (DEC), dipropyl carbonate, ethylmethyl carbonate (EMC), methylpropyl carbonate, and ethylpropyl carbonate, but the linear carbonate compound is not limited thereto.

Specific examples of the linear ester compound are methyl acetate, ethyl acetate, propyl acetate, methyl propionate, ethyl propionate, propyl propionate, and butyl propionate, but the linear ester compound is not limited thereto.

Specific examples of the cyclic ester compound are $\gamma$-butyrolactone, $\gamma$-valerolactone, $\gamma$-caprolactone, $\sigma$-valerolactone, and $\varepsilon$-caprolactone, but the cyclic ester compound is not limited thereto.

Specific examples of the ether-based solvent are dimethyl ether, diethyl ether, dipropyl ether, methylethyl ether, methylpropyl ether, ehtylpropyl ether, 1,3-dioxolane (DOL), and 2,2-bis(trifluoromethyl)-1,3-dioxolane (TFDOL), but the ether-based solvent is not limited thereto.

The glyme-based solvent is a solvent having higher permittivity and lower surface tension than the linear carbonate-based organic solvent as well as less reactivity with metal, wherein the glyme-based solvent is dimethoxyethane (glyme, DME), diethoxyethane, diglyme, tri-glyme (Triglyme), and tetra-glyme (TEGDME), but is not limited thereto.

Specific examples of the nitrile-based solvent are acetonitrile, propionitrile, butyronitrile, valeronitrile, caprylontrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, or 4-fluorophenylacetonitrile, but the nitrile-based solvent is not limited thereto.

Since ethylene carbonate and propylene carbonate, as the cyclic carbonate-based organic solvents, well dissociate the lithium salt in the electrolyte solution due to high permittivity as a highly viscous organic solvent, the ethylene carbonate and propylene carbonate may be preferably used, and, since an electrolyte solution having high electrical conductivity may be prepared when the above cyclic carbonate is mixed with the low viscosity, low permittivity linear carbonate, such as dimethyl carbonate, diethyl carbonate, or ethylmethyl carbonate, in an appropriate ratio, the cyclic carbonate may be more preferably used. In this case, the cyclic carbonate and the linear carbonate may be mixed and used in a volume ratio of 2:8 to 4:6.

### (3) Lithium Salt

The lithium salt is used as an electrolyte salt in a lithium secondary battery, wherein it is used as a medium for transferring ions. Typically, the lithium salt may include at least one compound selected from $LiPF_6$, $LiBF_4$, $LiSbF_6$, $LiAsF_6$, $LiClO_4$, $LiN(C_2F_5SO_2)_2$, $LiN(CF_3SO_2)_2$, $CF_3SO_3Li$, $LiC(CF_3SO_2)_3$, $LiC_4BO_8$, LiTFSI, LiFSI, and $LiClO_4$, and may preferably include $LiPF_6$, but is not limited thereto. The lithium salt may be used alone or in a mixture of two or more thereof, if necessary.

According to the present invention, the lithium salt may be included in a concentration of 0.5 M to 5 M, and may preferably be included in a concentration of 0.5 M to 4 M in the non-aqueous electrolyte solution. In a case in which the concentration of the lithium salt is within the above range, since a concentration of lithium ions in the electrolyte solution is appropriate, the battery may be properly charged and discharged and wetting in the battery is excellent due to appropriate viscosity of the electrolyte solution so that battery performance may be improved.

### (4) Other Electrolyte Additives

The non-aqueous electrolyte solution may further include other electrolyte additives.

The other electrolyte additives are known electrolyte additives that may be additionally added to the non-aqueous electrolyte solution of the present invention, wherein the other electrolyte additives, for example, may be vinylene carbonate, vinyl ethylene carbonate, catechol carbonate, $\alpha$-bromo-$\gamma$-butyrolactone, methyl chloroformate, succinimide, N-benzyloxycarbonyloxysuccinimide, N-hydroxysuccinimide, N-chlorosuccinimide, methyl cinnamate, 1,3,5-tricyanobenzene, tetracyanoquinodimethane, pyrocarbonate, cyclohexylbenzene, propane sultone, succinonitrile, adiponitrile, ethylene sulfate, propene sultone, fluoroethylene carbonate, $LiPO_2F_2$, LiODFB (Lithium difluorooxalatoborate), LiBOB (Lithium bis-(oxalato)borate), TMSPa (3-trimethoxysilanyl-propyl-N-aniline), TMSPi (Tris(trimethylsilyl)Phosphite), 12-crown-4, 15-crown-5, 18-crown-6, aza-ethers, boranes, borates, boronates, ferrocene and its derivatives, or $LiBF_4$.

The other electrolyte additives may be included in an amount of 0.01 part by weight to 10 parts by weight, preferably 0.05 part by weight to 7.0 parts by weight, and more preferably 0.05 part by weight to 5.0 parts by weight based on 100 parts by weight of the non-aqueous electrolyte solution.

**Lithium Secondary Battery**

The present invention provides a lithium secondary battery including the above non-aqueous electrolyte solution.

Specifically, the lithium secondary battery includes a positive electrode including a positive electrode active material, a negative electrode including a negative electrode active material, a separator disposed between the positive electrode and the negative electrode, and the non-aqueous electrolyte solution according to the present invention.

In this case, the lithium secondary battery of the present invention may be prepared according to a typical method known in the art. For example, after an electrode assembly, in which the separator is disposed between the positive electrode and the negative electrode, is formed, the electrode assembly is inserted into a battery case, and the lithium secondary battery may be prepared by injecting the non-aqueous electrolyte solution according to the present invention.

**(1) Positive Electrode**

The positive electrode may be prepared by coating a positive electrode collector with a slurry for a positive electrode which includes a positive electrode active material, a binder, a conductive agent, and a solvent.

The positive electrode collector is not particularly limited so long as it has conductivity without causing adverse chemical changes in the battery, and, for example, stainless steel, aluminum, nickel, titanium, fired carbon, or aluminum or stainless steel that is surface-treated with one of carbon, nickel, titanium, silver, or the like may be used. Also, microscopic irregularities may be formed on its surface to improve bonding strength with the positive electrode active material, and the positive electrode collector may be used in various shapes such as that of a film, a sheet, a foil, a net, a porous body, a foam body, a non-woven fabric body, and the like.

The positive electrode active material is a compound capable of reversibly intercalating and deintercalating lithium, wherein the positive electrode active material may specifically include a lithium metal oxide including lithium and at least one metal such as cobalt, manganese, nickel, or aluminum. More specifically, the lithium metal oxide may include lithium-manganese-based oxide (e.g., $LiMnO_2$, $LiMn_2O_4$, etc.), lithium-cobalt-based oxide (e.g., $LiCoO_2$, etc.), lithium-nickel-based oxide (e.g., $LiNiO_2$, etc.), lithium-nickel-manganese-based oxide (e.g., $LiNi_{1-Y}Mn_YO_2$ (where 0<Y<1), $LiMn_{2-Z}Ni_zO_4$ (where 0<Z<2), etc.), lithium-nickel-cobalt-based oxide (e.g., $LiNi_{1-Y1}Co_{Y1}O_2$ (where 0<Y1<1), etc.), lithium-manganese-cobalt-based oxide (e.g., $LiCo_{1-Y2}Mn_{Y2}O_2$ (where 0<Y2<1), $LiMn_{2-Z1}Co_{z1}O_4$ (where 0<Z1<2), etc.), lithium-nickel-manganese-cobalt-based oxide (e.g., $Li(Ni_pCo_qMn_{r1})O_2$ (where 0<p<1, 0<q<1, 0<r1<1, and p+q+r1=1) or $Li(Ni_{p1}Co_{q1}Mn_{r2})O_4$ (where 0<p1<2, 0<q1<2, 0<r2<2, and p1+q1+r2=2), etc.), or lithium-nickel-cobalt-transition metal (M) oxide (e.g., $Li(Ni_{p2}Co_{q2}Mn_{r3}M_{s2})O_2$ (where M is selected from the group consisting of aluminum (Al), iron (Fe), vanadium (V), chromium (Cr), titanium (Ti), tantalum (Ta), magnesium (Mg), and molybdenum (Mo), and p2, q2, r3, and s2 are atomic fractions of each independent elements, wherein 0<p2<1, 0<q2<1, 0<r3<1, 0<S2<1, and p2+q2+r3+S2=1), etc.), and any one thereof or a compound of two or more thereof may be included.

Among these materials, in terms of the improvement of capacity characteristics and stability of the battery, the lithium metal oxide may be $LiCoO_2$, $LiMnO_2$, $LiNiO_2$, lithium nickel manganese cobalt oxide (e.g., $Li(Ni_{1/3}Mn_{1/3}Co_{1/3})O_2$, $Li(Ni_{0.6}Mn_{0.2}Co_{0.2})O_2$, $Li(Ni_{0.5}Mn_{0.3}Co_{0.2})O_2$, $Li(Ni_{0.7}Mn_{0.15}Co_{0.15})O_2$, and $Li(Ni_{0.8}Mn_{0.1}Co_{0.1})O_2$, etc.), or lithium nickel cobalt aluminum oxide (e.g., $LiNi_{0.8}Co_{0.15}Al_{0.05}O_2$, etc.), and, in consideration of a significant improvement effect due to the control of types and content ratios of components constituting the lithium composite metal oxide, the lithium composite metal oxide may be $Li(Ni_{0.6}Mn_{0.2}Co_{0.2})O_2$, $Li(Ni_{0.5}Mn_{0.3}Co_{0.2})O_2$, $Li(Ni_{0.7}Mn_{0.15}Co_{0.15})O_2$, and $Li(Ni_{0.8}Mn_{0.1}Co_{0.1})O_2$, and any one thereof or a mixture of two or more thereof may be used.

The positive electrode active material may be included in an amount of 60 wt% to 99 wt%, preferably 70 wt% to 99 wt%, and more preferably 80 wt% to 98 wt% based on a total weight of solid content excluding the solvent in the slurry for a positive electrode.

The binder is a component that assists in the binding between the active material and the conductive agent and in the binding with the current collector.

Examples of the binder may be polyvinylidene fluoride, polyvinyl alcohol, carboxymethylcellulose (CMC), starch, hydroxypropylcellulose, regenerated cellulose, polyvinylpyrrolidone, tetrafluoroethylene, polyethylene (PE), polypropylene, an ethylene-propylene-diene monomer, a sulfonated ethylene-propylene-diene monomer, a styrene-butadiene rubber, a fluoro rubber, or various copolymers.

The binder may commonly be included in an amount of 1 wt% to 20 wt%, preferably 1 wt% to 15 wt%, and more preferably 1 wt% to 10 wt% based on the total weight of the solid content excluding the solvent in the slurry for a positive electrode.

The conductive agent is a component for further improving conductivity of the positive electrode active material.

The conductive agent is not particularly limited as long as it has conductivity without causing adverse chemical changes in the battery, and, for example, a conductive material, such as: graphite; a carbon-based material such as carbon black, acetylene black, Ketjen black, channel black, furnace black, lamp black, or thermal black; conductive fibers such as carbon fibers or metal fibers; metal powder such as fluorocarbon powder, aluminum powder, and nickel powder; conductive whiskers such as zinc oxide whiskers and potassium titanate whiskers; conductive metal oxide such as titanium oxide; or polyphenylene derivatives, may be used.

The conductive agent may commonly be included in an amount of 1 wt% to 20 wt%, preferably 1 wt% to 15 wt%, and more preferably 1 wt% to 10 wt% based on the total weight of the solid content excluding the solvent in the slurry for a positive electrode.

The solvent may include an organic solvent, such as N-methyl-2-pyrrolidone (NMP), and may be used in an amount such that desirable viscosity is obtained when the positive electrode active material as well as optionally the binder and the conductive agent is included. For example, the solvent may be included in an amount such that a concentration of the solid content including the positive electrode active material as well as optionally the binder and the conductive agent is in a range of 50 wt% to 95 wt%, preferably 70 wt% to 95 wt%, and more preferably 70 wt% to 90 wt%.

**(2) Negative Electrode**

The negative electrode, for example, may be prepared by coating a slurry for a negative electrode, which includes a negative electrode active material, a binder, a conductive agent, and a solvent, on a negative electrode collector, or a graphite electrode formed of carbon (C) or a metal itself may be used as the negative electrode.

For example, in a case in which the negative electrode is prepared by coating the slurry for a negative electrode on the negative electrode collector, the negative electrode collector generally has a thickness of 3 $\mu$m to 500 $\mu$m. The negative electrode collector is not particularly limited so long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, an aluminum-cadmium alloy, or the like may be used. Also, similar to the positive electrode collector, the negative electrode collector may have fine surface roughness to improve bonding strength with the negative electrode active material, and the negative electrode collector may be used in various shapes such as a film, a sheet, a foil, a net, a porous body, a foam body, a non-woven fabric body, and the like.

The negative electrode active material may include at least one negative electrode active material selected from the group consisting of natural graphite, artificial graphite, a carbonaceous material; lithium-containing titanium composite oxide (LTO), silicon (Si), $SiO_x$, metals (Me) such as tin (Sn), lithium (Li), zinc (Zn), magnesium (Mg), cadmium (Cd), cerium (Ce), nickel (Ni), or Fe; alloys composed of the metals (Me); oxides ($MeO_x$) of the metals (Me); and composites of the metals (Me) and carbon. A silicon-based negative electrode active material including silicon (Si), silicon oxide ($SiO_x$), or a silicon alloy may specifically be used as the negative electrode active material. In this case, since a thin and stable SEI layer containing a siloxane bond is formed, the high-temperature stability and life characteristics of the battery may be further improved.

The negative electrode active material may be included in an amount of 60 wt% to 99 wt%, preferably 70 wt% to 99 wt%, and more preferably 80 wt% to 98 wt% based on a total weight of solid content excluding the solvent in the slurry for a negative electrode.

The binder is a component that assists in the binding between the conductive agent, the active material, and the current collector. Examples of the binder may be polyvinylidene fluoride (PVDF), polyvinyl alcohol, carboxymethylcellulose (CMC), starch, hydroxypropylcellulose, regenerated cellulose, polyvinylpyrrolidone, tetrafluoroethylene, polyethylene, polypropylene, an ethylene-propylene-diene monomer, a sulfonated ethylene-propylene-diene monomer, a styrene-butadiene rubber, a fluoro rubber, or various copolymers thereof.

The binder may be commonly included in an amount of 1 wt% to 20 wt%, preferably 1 wt% to 15 wt%, and more preferably 1 wt% to 10 wt% based on the total weight of the solid content excluding the solvent in the slurry for a negative electrode.

The conductive agent is a component for further improving conductivity of the negative electrode active material. The conductive agent is not particularly limited as long as it has conductivity without causing adverse chemical changes in the battery, and, for example, a conductive material, such as: graphite such as natural graphite or artificial graphite; carbon black such as acetylene black, Ketjen black, channel black, furnace black, lamp black, and thermal black; conductive fibers such as carbon fibers or metal fibers; metal powder such as fluorocarbon powder, aluminum powder, and nickel powder; conductive whiskers such as zinc oxide whiskers and potassium titanate whiskers; conductive metal oxide such as

titanium oxide; or polyphenylene derivatives, may be used.

The conductive agent may be included in an amount of 1 wt% to 20 wt%, preferably 1 wt% to 15 wt%, and more preferably 1 wt% to 10 wt% based on the total weight of the solid content excluding the solvent in the slurry for a negative electrode.

The solvent may include water or an organic solvent, such as NMP (N-methyl-2-pyrrolidone), and may be used in an amount such that desirable viscosity is obtained when the negative electrode active material as well as optionally the binder and the conductive agent is included. For example, the solvent may be included in an amount such that a concentration of the solid content including the negative electrode active material as well as optionally the binder and the conductive agent is in a range of 50 wt% to 95 wt%, preferably, 70 wt% to 90 wt%.

In a case in which the metal itself is used as the negative electrode, the negative electrode may be a metal thin film itself or may be prepared by a method in which the metal is physically bonded, rolled, or deposited on the negative electrode collector. As the deposition method, an electrical deposition method or a chemical vapor deposition method for the metal may be used.

For example, the metal thin film itself or the metal to be bonded/rolled/deposited on the negative electrode collector may include one type of metal selected from the group consisting of lithium (Li), nickel (Ni), tin (Sn), copper (Cu), and indium (In) or an alloy of two types of metals.

### (3) Separator

Also, a conventional porous polymer film typically used as a separator, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, may be used alone or in a lamination therewith as the separator, and a typical porous nonwoven fabric, for example, a nonwoven fabric formed of high melting point glass fibers or polyethylene terephthalate fibers may be used, but the present invention is not limited thereto. Furthermore, a coated separator including a ceramic component or a polymer material may be used to secure heat resistance or mechanical strength, and the separator having a single layer or multilayer structure may be optionally used.

A shape of the lithium secondary battery of the present invention is not particularly limited, but a cylindrical type using a can, a prismatic type, a pouch type, or a coin type may be used.

According to the present invention, a battery module including the lithium secondary battery as a unit cell and a battery pack including the battery module may be provided. Since the battery module and the battery pack include the lithium secondary battery having high capacity, high rate capability, and high cycle characteristics, the battery module and the battery pack may be used as a power source of a medium and large sized device selected from the group consisting of an electric vehicle, a hybrid electric vehicle, a plug-in hybrid electric vehicle, and a power storage system.

Hereinafter, the present invention will be described in detail, according to specific examples. However, the following examples are merely presented to exemplify the present invention, and the scope of the present invention is not limited thereto.

## Synthesis Examples

### Synthesis Example 1. Preparation of the Compound Represented by Formula I-a

After adding 3.5 equivalents of 2,2,2-trifluoroethanol to a two-neck round-bottom flask, a dropping funnel and a reflux condenser were connected, the round-bottom flask was placed in an oil bath and then heated to 50°C, and 1 equivalent of trichlorovinylsilane was slowly added dropwise for 1 hour using the dropping funnel while flowing nitrogen gas. After completion of the dropwise addition, reactants were refluxed at 70°C to react overnight while flowing nitrogen gas, and, after cooling to room temperature, a pH was checked. In this case, if the pH was less than 7, it was neutralized with TEA (triethylamine), and a salt formed in this process was then filtered. Residual reactants and by-products were removed by reduced pressure at room temperature, and then vacuum distilled at 60°C to obtain the compound represented by Formula I-a.

$^1H$-NMR data of the compound represented by Formula I-a are as follows.

$^1H$-NMR(400 MHz, $CDCl_3$) $\delta$(ppm): 6.34(1H, dd), 6.18(1H, dd), 5.85(1H, dd), 4.12(6H, q)

### Synthesis Example 2. Preparation of the Compound Represented by Formula II-a

After adding 2.5 equivalents of 2,2,2-trifluoroethanol to a two-neck round-bottom flask, a dropping funnel and a reflux condenser were connected, the round-bottom flask was placed in an oil bath and then heated to 50°C, and 1 equivalent of dichlorovinylsilane was slowly added dropwise for 1 hour using the dropping funnel while flowing nitrogen gas. After completion of the dropwise addition, reactants were refluxed at 70°C to react overnight while flowing nitrogen

gas, and, after cooling to room temperature, a pH was checked. In this case, if the pH was less than 7, it was neutralized with TEA (triethylamine), and a salt formed in this process was then filtered. Residual reactants and by-products were removed by reduced pressure at room temperature, and then vacuum distilled at 55°C to obtain the compound represented by Formula II-a.

$^1$H-NMR data of the compound represented by Formula II-a are as follows.

$^1$H-NMR(400 MHz, $CDCl_3$) δ(ppm): 6.32(2H, dd), 6.14(2H, dd), 5.84 (2H, dd), 4.23(4H, q)

**Synthesis Example 3. Preparation of the Compound Represented by Formula III-b**

Dichlorodimethylsilane (1 equivalent) was slowly added dropwise for 1 hour to a Schlenk round-bottom flask containing allylmagnesium bromide (2.2 equivalents, 1 M in ether) in a nitrogen atmosphere and an ice bath. Thereafter, a reaction was performed overnight at room temperature conditions. The reaction was terminated by adding 5 equivalents of a saturated $NH_4Cl$ aqueous solution dropwise into the corresponding flask. After an organic layer, which was obtained after the aqueous solution was removed by separation, was dried with $CaCl_2$, precipitates were removed by filtration. Residual reactants and by-products were removed by reduced pressure at room temperature, and then vacuum distilled at 80°C to obtain the compound represented by Formula III-b.

$^1$H-NMR data of the compound represented by Formula III-b are as follows.

$^1$H-NMR (400 MHz, $CDCl_3$) δ(ppm): 5.77(2H, m), 4.85(4H, m), 1.53(4H, d), 0.00(6H, s)

**Synthesis Example 4. Preparation of the Compound Represented by Formula III-j**

3-(trichlorosilyl)propanenitrile (1 equivalent) was slowly added dropwise for 1 hour to a Schlenk round-bottom flask containing vinylmagnesium bromide (3.3 equivalents, 1 M in ether) in a nitrogen atmosphere and an ice bath. Thereafter, a reaction was performed overnight at room temperature conditions. The reaction was terminated by adding 7 equivalents of a saturated $NH_4Cl$ aqueous solution dropwise into the corresponding flask. After an organic layer, which was obtained after the aqueous solution was removed by separation, was dried with $CaCl_2$, precipitates were removed by filtration. Residual reactants and by-products were removed by reduced pressure at room temperature, and then vacuum distilled at 120°C to obtain the compound represented by Formula III-j.

$^1$H-NMR data of the compound represented by Formula III-j are as follows.

$^1$H-NMR(400 MHz, $CDCl_3$) δ(ppm): 6.13(6H, m), 5.82(3H, m), 2.39(2H, t), 1.13(2H, t)

**Synthesis Example 5. Preparation of the Compound Represented by Formula III-m**

Trichloro(3,3,4,4,5,5,6,6,7,7,8,8,8-tridecafluorooctyl)silane (1 equivalent) was slowly added dropwise for 1 hour to a Schlenk round-bottom flask containing vinylmagnesium bromide (3.3 equivalents, 1 M in ether) in a nitrogen atmosphere and an ice bath. Thereafter, a reaction was performed overnight at room temperature conditions. The reaction was terminated by adding 7 equivalents of a saturated $NH_4Cl$ aqueous solution dropwise into the corresponding flask. After an organic layer, which was obtained after the aqueous solution was removed by separation, was dried with $CaCl_2$, precipitates were removed by filtration. Residual reactants and by-products were removed by reduced pressure at room temperature, and then vacuum distilled at 110°C to obtain the compound represented by Formula III-m.

$^1$H-NMR data of the compound represented by Formula III-m are as follows.

$^1$H-NMR(400 MHz, $CDCl_3$) δ(ppm): 6.14(6H, m), 5.83 (3H, m), 2.07(2H, m), 0.97(2H, m)

**Examples and Comparative Examples**

**Example 1**

(Non-aqueous Electrolyte Solution Preparation)

A non-aqueous electrolyte solution was prepared by adding 0.67 g of the compound represented by Formula I-a and 0.33 g of the compound represented by Formula II-a to 99 g of an organic solution (ethylene carbonate (EC):ethyl methyl carbonate (EMC) = 3:7 volume ratio) in which 1.0 M $LiPF_6$, 0.5 wt% of VC, and 0.2 wt% of $LiBF_4$ were dissolved.

(Secondary Battery Preparation)

A positive electrode active material ($LiNi_{0.8}Co_{0.1}Mn_{0.1}O_2$):a conductive agent (carbon black) :a binder (polyvinylidene fluoride) were added in a weight ratio of 97.5:1:1.5 to N-methyl-2-pyrrolidone (NMP) to prepare a slurry for a positive electrode (solid content 60 wt%). One surface of a 15 μm thick positive electrode collector (Al thin film) was coated

with the slurry for a positive electrode, dried, and roll-pressed to prepare a positive electrode.

A negative electrode active material (graphite:silicon oxide = 92:8 weight ratio):a conductive agent (carbon black):a styrene-butadiene rubber:carboxymethyl cellulose were added to distilled water in a weight ratio of 95:1.5:1.5:2 to prepare a slurry for a negative electrode (solid content 50 wt%). One surface of a 15 μm thick negative electrode collector (Cu thin film) was coated with the slurry for a negative electrode, dried, and roll-pressed to prepare a negative electrode.

After disposing a porous polypropylene separator between the prepared positive electrode and negative electrode in a dry room to prepare an electrode assembly, the electrode assembly was put into a battery case, the above non-aqueous electrolyte solution was injected, and the battery case was sealed to prepare a pouch type lithium secondary battery (battery capacity 6.24 mAh).

**Example 2**

A non-aqueous electrolyte solution was prepared by adding 0.5 g of the compound represented by Formula I-a and 0.5 g of the compound represented by Formula II-a to 99 g of an organic solution (ethylene carbonate (EC):ethyl methyl carbonate (EMC) = 3:7 volume ratio) in which 1.0 M $LiPF_6$, 0.5 wt% of VC, and 0.2 wt% of $LiBF_4$ were dissolved. A lithium secondary battery was prepared in the same manner as in Example 1 except that the non-aqueous electrolyte solution prepared as described above was used.

**Example 3**

A non-aqueous electrolyte solution was prepared by adding 0.5 g of the compound represented by Formula I-a and 0.5 g of the compound represented by Formula III-b to 99 g of an organic solution (ethylene carbonate (EC):ethyl methyl carbonate (EMC) = 3:7 volume ratio) in which 1.0 M $LiPF_6$, 0.5 wt% of VC, and 0.2 wt% of $LiBF_4$ were dissolved. A lithium secondary battery was prepared in the same manner as in Example 1 except that the non-aqueous electrolyte solution prepared as described above was used.

**Example 4**

A non-aqueous electrolyte solution was prepared by adding 0.5 g of the compound represented by Formula I-a and 0.5 g of the compound represented by Formula III-j to 99 g of an organic solution (ethylene carbonate (EC):ethyl methyl carbonate (EMC) = 3:7 volume ratio) in which 1.0 M $LiPF_6$, 0.5 wt% of VC, and 0.2 wt% of $LiBF_4$ were dissolved. A lithium secondary battery was prepared in the same manner as in Example 1 except that the non-aqueous electrolyte solution prepared as described above was used.

**Example 5**

A non-aqueous electrolyte solution was prepared by adding 0.5 g of the compound represented by Formula I-a and 0.5 g of the compound represented by Formula III-m to 99 g of an organic solution (ethylene carbonate (EC):ethyl methyl carbonate (EMC) = 3:7 volume ratio) in which 1.0 M $LiPF_6$, 0.5 wt% of VC, and 0.2 wt% of $LiBF_4$ were dissolved. A lithium secondary battery was prepared in the same manner as in Example 1 except that the non-aqueous electrolyte solution prepared as described above was used.

**Example 6**

A non-aqueous electrolyte solution was prepared by adding 0.5 g of the compound represented by Formula I-a and 0.5 g of tetravinylsilane (Sigma-Aldrich), the compound represented by Formula IV-a, to 99 g of an organic solution (ethylene carbonate (EC):ethyl methyl carbonate (EMC) = 3:7 volume ratio) in which 1.0 M $LiPF_6$, 0.5 wt% of VC, and 0.2 wt% of $LiBF_4$ were dissolved. A lithium secondary battery was prepared in the same manner as in Example 1 except that the non-aqueous electrolyte solution prepared as described above was used.

**Example 7**

A non-aqueous electrolyte solution was prepared by adding 0.5 g of the compound represented by Formula I-a and 0.5 g of 2,4,6,8-tetramethyl-2,4,6,8-tetravinylcyclotetrasiloxane (Tokyo Chemical Industry, Co., Ltd.), the compound represented by Formula V-b, to 99 g of an organic solution (ethylene carbonate (EC):ethyl methyl carbonate (EMC) = 3:7 volume ratio) in which 1.0 M $LiPF_6$, 0.5 wt% of VC, and 0.2 wt% of $LiBF_4$ were dissolved. A lithium secondary battery was prepared in the same manner as in Example 1 except that the non-aqueous electrolyte solution prepared as described above was used.

**Comparative Example 1**

A lithium secondary battery was prepared in the same manner as in Example 1 except that an organic solution (ethylene carbonate (EC):ethyl methyl carbonate (EMC) = 3:7 volume ratio), in which 1.0 M $LiPF_6$, 0.5 wt% of VC, and 0.2 wt% of $LiBF_4$ were dissolved, was used as a non-aqueous electrolyte solution.

**Comparative Example 2**

A non-aqueous electrolyte solution was prepared by adding 1 g of 1,3-propane sultone (Sigma-Aldrich) to 99 g of an organic solution (ethylene carbonate (EC):ethyl methyl carbonate (EMC) = 3:7 volume ratio) in which 1.0 M $LiPF_6$, 0.5 wt% of VC, and 0.2 wt% of $LiBF_4$ were dissolved. A lithium secondary battery was prepared in the same manner as in Example 1 except that the non-aqueous electrolyte solution prepared as described above was used.

**Comparative Example 3**

A non-aqueous electrolyte solution was prepared by adding 1 g of TEOS (tetraethoxysilane) (Sigma-Aldrich) to 99 g of an organic solution (ethylene carbonate (EC):ethyl methyl carbonate (EMC) = 3:7 volume ratio) in which 1.0 M $LiPF_6$, 0.5 wt% of VC, and 0.2 wt% of $LiBF_4$ were dissolved. A lithium secondary battery was prepared in the same manner as in Example 1 except that the non-aqueous electrolyte solution prepared as described above was used.

**Comparative Example 4**

A non-aqueous electrolyte solution was prepared by adding 1 g of the compound represented by Formula I-a to 99 g of an organic solution (ethylene carbonate (EC):ethyl methyl carbonate (EMC) = 3:7 volume ratio) in which 1.0 M $LiPF_6$, 0.5 wt% of VC, and 0.2 wt% of $LiBF_4$ were dissolved. A lithium secondary battery was prepared in the same manner as in Example 1 except that the non-aqueous electrolyte solution prepared as described above was used.

[Table 1]

| | Lithium salt and other electrolyte additives | Organic solvent | | Additives | |
|---|---|---|---|---|---|
| | | Configuration | Addition amount (g) | Type | Addition amount (g) |
| Example 1 | 1.0M $LiPF_6$ 0.5wt% VC 0.2wt% $LiBF_4$ | EC:EMC = 3:7 volume ratio | 99 | Formula I-a | 0.67 |
| | | | | Formula II-a | 0.33 |
| Example 2 | | | 99 | Formula I-a | 0.5 |
| | | | | Formula II-a | 0.5 |
| Example 3 | | | 99 | Formula I-a | 0.5 |
| | | | | Formula III-b | 0.5 |
| Example 4 | | | 99 | Formula I-a | 0.5 |
| | | | | Formula III-j | 0.5 |
| Example 5 | | | 99 | Formula I-a | 0.5 |
| | | | | Formula III-m | 0.5 |
| Example 6 | | | 99 | Formula I-a | 0.5 |
| | | | | Formula IV-a | 0.5 |
| Example 7 | | | 99 | Formula I-a | 0.5 |
| | | | | Formula V-b | 0.5 |
| Comparative Example 1 | | | 100 | - | - |

(continued)

| | Lithium salt and other electrolyte additives | Organic solvent | | Additives | |
|---|---|---|---|---|---|
| | | Configuration | Addition amount (g) | Type | Addition amount (g) |
| Comparative Example 2 | | | 99 | 1,3-propane sultone | 1 |
| Comparative Example 3 | | | 99 | TEOS | 1 |
| Comparative Example 4 | | | 99 | Formula I-a | 1 |

**Experimental Examples**

**Experimental Example 1: High-temperature (60°C) Storage Characteristics Evaluation**

A volume change rate and a resistance increase rate after high-temperature storage were confirmed by the following method.

1) Volume change rate (%) after high-temperature storage

Each of the secondary batteries prepared in Examples 1 to 7 and Comparative Examples 1 to 4 was activated at a constant current (CC) of 0.1 C. Subsequently, each secondary battery was charged at a CC of 0.3 C to 4.2 V under a constant current-constant voltage (CC-CV) charge condition at 25°C using PESCO 5-0.5 charge/discharge equipment (manufacturer: PNE SOLUTION Co., Ltd., 5 V, 500 mA), then subjected to 0.05 C current cut-off, and discharged at 0.33 C to 2.5 V under a CC condition. The above charging and discharging were defined as one cycle and two cycles were performed. Subsequently, each secondary battery was fully charged at a constant current-constant voltage of 0.33 C/4.2 V, and discharged at 2.5 C for 10 seconds at a state of charge (SOC) of 50% to calculate initial resistance using a voltage difference between a voltage before discharging for 10 seconds and a voltage after discharging for 10 seconds. Then, each secondary battery was discharged at a constant current of 0.33 C to 2.5 V. Subsequently, degassing was performed, and an initial volume was measured by putting the initially charged and discharged lithium secondary battery in a bowl filled with water at room temperature and using TWD-150DM equipment by Two-pls. Then, the lithium secondary battery was fully charged at a constant current-constant voltage of 0.33 C/4.2 V, and stored at 60°C for 4 weeks (SOC 100%), and a volume after high-temperature storage was then measured by putting the lithium secondary battery in a bowl filled with water at room temperature and using TWD-150DM equipment by Two-pls.

A volume change rate was evaluated by substituting the initial volume and volume after high-temperature storage measured as described above into the following Equation (1), and the results thereof are presented in Table 2 below.

Volume change rate (%) after high- temperature storage = {(volume after high-temperature storage - initial volume)/initial volume} $\times$ 100    Equation (1):

2) Resistance Increase Rate (%) after high-temperature storage

Each of the secondary batteries prepared in Examples 1 to 7 and Comparative Examples 1 to 4 was activated at a constant current (CC) of 0.1 C. Subsequently, each secondary battery was charged at a CC of 0.3 C to 4.2 V under a constant current-constant voltage (CC-CV) charge condition at 25°C using PESCO 5-0.5 charge/discharge equipment (manufacturer: PNE SOLUTION Co., Ltd., 5 V, 500 mA), then subjected to 0.05 C current cut-off, and discharged at 0.33 C to 2.5 V under a CC condition. The above charging and discharging were defined as one cycle and two cycles were performed. Subsequently, each secondary battery was fully charged at a constant current-constant voltage of 0.33 C/4.2 V, and discharged at 2.5 C for 10 seconds at an SOC of 50% to calculate initial resistance using a voltage difference between a voltage before discharging for 10 seconds and a voltage after discharging for 10 seconds. Then, each secondary battery was discharged at a constant current of 0.33 C to 2.5 V. Subsequently, degassing was performed, each secondary battery was charged to 4.2 V and stored at 60°C for 4 weeks (SOC 100%), and resistance after high-temperature storage was then measured while discharging the battery at 2.5 C for 10 seconds at an SOC of 50%.

A resistance increase rate was evaluated by substituting the initial resistance value and resistance value after high-temperature storage measured as described above into the following Equation (2), and the results thereof are

presented in Table 2 below.

Resistance increase rate (%) after high- temperature storage = {(resistance value after high- temperature storage - initial resistance value)/initial resistance value} × 100 Equation (2):

[Table 2]

| | Volume change rate after high-temperature storage (%) | Resistance increase rate after high-temperature storage (%) |
|---|---|---|
| Example 1 | 13 | 11 |
| Example 2 | 9 | 10 |
| Example 3 | 17 | 16 |
| Example 4 | 15 | 14 |
| Example 5 | 11 | 10 |
| Example 6 | 18 | 15 |
| Example 7 | 13 | 12 |
| Comparative Example 1 | 34 | 21 |
| Comparative Example 2 | 28 | 20 |
| Comparative Example 3 | 25 | 19 |
| Comparative Example 4 | 21 | 18 |

**Experimental Example 2: Cycle Characteristics Evaluation**

Each of the secondary batteries prepared in Examples 1 to 7 and Comparative Examples 1 to 4 was activated at a constant current (CC) of 0.1 C. Subsequently, each secondary battery was charged at a CC of 0.3 C to 4.2 V under a constant current-constant voltage (CC-CV) charge condition at 25°C using PESCO 5-0.5 charge/discharge equipment (manufacturer: PNE SOLUTION Co., Ltd., 5 V, 500 mA), then subjected to 0.05 C current cut-off, and discharged at 0.33 C to 2.5 V under a CC condition. The above charging and discharging were defined as one cycle and two cycles were performed. Subsequently, each secondary battery was fully charged at a constant current-constant voltage of 0.33 C/4.2 V, and discharged at 2.5 C for 10 seconds at an SOC of 50% to calculate initial resistance using a voltage difference between a voltage before discharging for 10 seconds and a voltage after discharging for 10 seconds. Then, each secondary battery was discharged at a constant current of 0.33 C to 2.5 V.

Subsequently, degassing was performed, and each secondary battery was charged at a constant current of 0.33 C to 4.2 V within a voltage operation range of 2.5 V to 4.5 V at 45°C, and subsequently charged at a constant voltage of 4.2 V to terminate charging when the charging current reached 0.05 C. Thereafter, the secondary battery was left standing for 20 minutes, and then discharged at a constant current of 0.33 C to 2.5 V. The above charging and discharging were defined as one cycle and 100 cycles of charging and discharging were performed. In this case, capacity after one cycle and capacity after 100 cycles were measured using PESCO 5-0.5 charge/discharge equipment (manufacturer: PNE SOLUTION Co., Ltd., 5 V, 500 mA), and a capacity retention was evaluated by substituting the capacities into the following Equation (3). The results thereof are presented in Table 3 below.

: Capacity retention (%) after 100 cycles = {(capacity after 100 cycles - capacity after one cycle)/ capacity after one cycle) × 100 Equation (3)

After 100 cycles were performed, each secondary battery was discharged at 2.5 C for 10 seconds at an SOC of 50% to calculate resistance after 100 cycles using a voltage difference between a voltage before discharging for 10 seconds and a voltage after discharging for 10 seconds.

A resistance increase rate was evaluated by substituting the initial resistance value and resistance value after 100 cycles measure as described above into the following Equation (4). The results thereof are presented in Table 3 below.

Resistance increase rate (%) after 100 cycles = {(resistance value after 100 cycles - initial resistance value)/initial resistance value} $\times$ 100 Equation (4):

[Table 3]

| | Capacity retention after 100 cycles (%) | Resistance increase rate after 100 cycles (%) |
|---|---|---|
| Example 1 | 93 | 8 |
| Example 2 | 95 | 8 |
| Example 3 | 87 | 13 |
| Example 4 | 88 | 12 |
| Example 5 | 90 | 9 |
| Example 6 | 86 | 14 |
| Example 7 | 91 | 7 |
| Comparative Example 1 | 76 | 19 |
| Comparative Example 2 | 79 | 18 |
| Comparative Example 3 | 78 | 18 |
| Comparative Example 4 | 83 | 16 |

Referring to Table 2, it may be confirmed that volume change rates and resistance increase rates of the secondary batteries prepared in Examples 1 to 7 were significantly lower than those of the secondary batteries prepared in Comparative Examples 1 to 4 even during high-temperature storage. Also, referring to Table 3, it may be confirmed that life characteristics of the secondary batteries prepared in Examples 1 to 7 were significantly better than those of the secondary batteries prepared in Comparative Examples 1 to 4. The reason for this is that, in a case in which the compound represented by Formula I; and the at least one compound selected from the compounds represented by Formula II to Formula V were included as an additive in the non-aqueous electrolyte solution, since polysiloxane and/or polysilylene were formed between the additive-the additive, an SEI layer with high structural flexibility and stability was consequently formed. Particularly, since the secondary batteries prepared in Examples 1 to 7 may form a more robust SEI layer having a covalent bond-based polysiloxane network on a surface of the negative electrode by including the silicon-based negative electrode active material, high durability of the SEI layer may be doubled. As a result, it may be confirmed that an effect of improving capacity retention and resistance increase rate was more excellent.

Thus, in the case that the compound represented by Formula I; and the at least one compound selected from the compounds represented by Formula II to Formula V were included as the additive in the non-aqueous electrolyte solution as in the present invention, since a low-resistance and robust SEI layer was formed, it may be understood that a lithium secondary battery with excellent high-temperature stability and life characteristics may be provided.

## Claims

**1.** A non-aqueous electrolyte solution comprising:

an organic solvent;
a lithium salt;
a compound represented by Formula I; and
at least one selected from compounds represented by Formula II to Formula V:

[Formula 1]

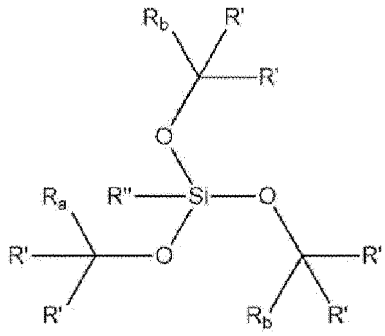

[Formula II]

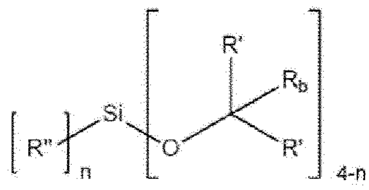

[Formula III]

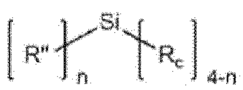

[Formula IV] $Si(R'')_4$

[Formula V]

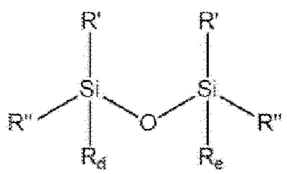

wherein, in Formula I to Formula V,
$R_a$ is a $C_1$-$C_{10}$ alkyl group substituted with at least one fluorine element,
$R_b$ is each independently a $C_1$-$C_{10}$ alkyl group unsubstituted or substituted with at least one fluorine element,
$R_c$ is each independently an unsubstituted or substituted $C_1$-$C_{10}$ alkyl group,
R' is each independently hydrogen; an unsubstituted or substituted $C_1$-$C_{10}$ alkyl group; or an unsubstituted or substituted $C_1$-$C_{10}$ heteroalkyl group,
R" is an unsubstituted or substituted $C_2$-$C_{10}$ alkenyl group; or an unsubstituted or substituted $C_2$-$C_{10}$ alkynyl group,
$R_d$ and $R_e$ are each independently hydrogen; an unsubstituted or substituted $C_1$-$C_{10}$ alkyl group; an unsubstituted or substituted $C_1$-$C_{10}$ heteroalkyl group; or an unsubstituted or substituted siloxane group,
wherein, in a case in which both $R_d$ and $R_e$ are siloxane groups, $R_d$ and $R_e$ are connected to each other to form a ring composed of a siloxane bond, and
n is 2 or 3.

2. The non-aqueous electrolyte solution of claim 1, wherein the compound represented by Formula I is at least one compound selected from compounds of Formulae I-a to I-f:

[Formula I-a]

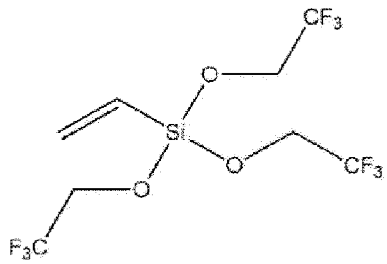

[Formula I-b]

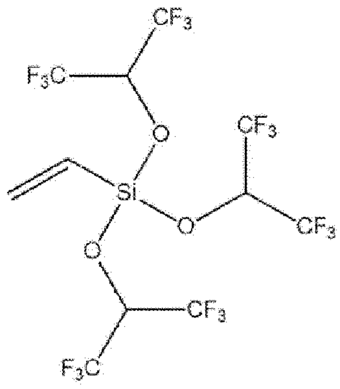

[Formula I-c]

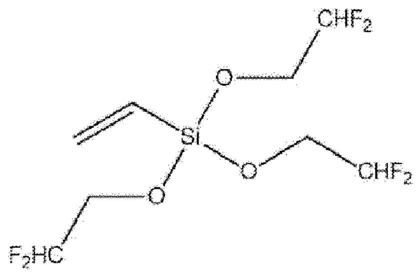

[Formula I-d]

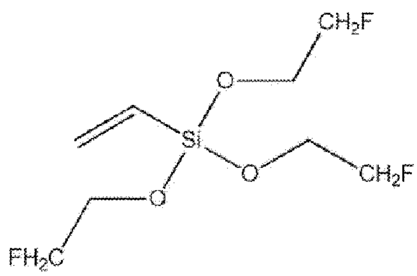

[Formula I-e]

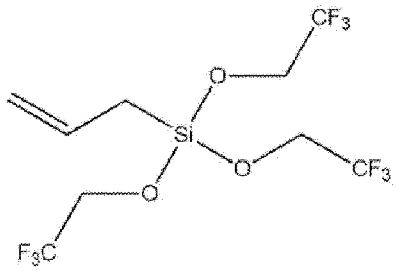

[Formula I-f]

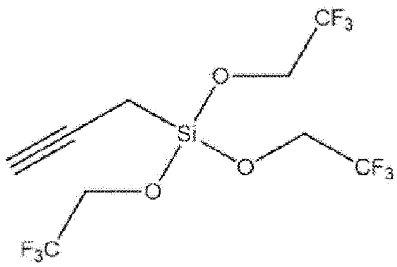

.

3. The non-aqueous electrolyte solution of claim 1, wherein the compound represented by Formula II is at least one compound selected from compounds of Formulae II-a to II-f:

[Formula II-a]

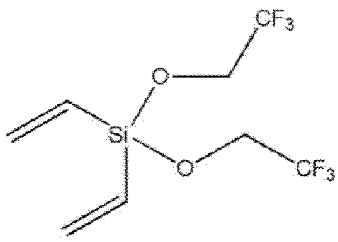

[Formula II-b]

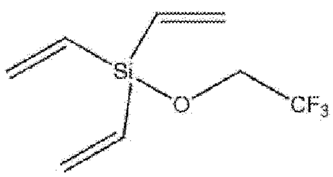

[Formula II-c]

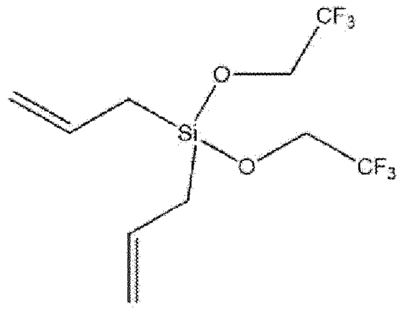

[Formula II-d]

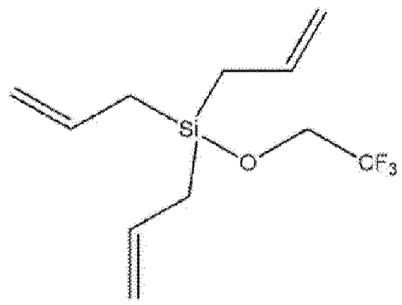

[Formula II-e]

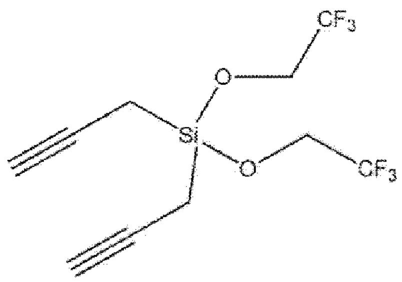

[Formula II-f]

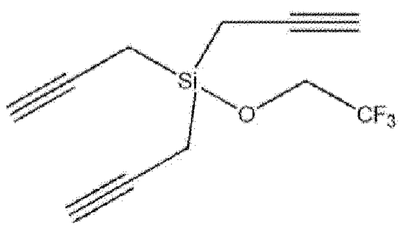

.

4. The non-aqueous electrolyte solution of claim 1, wherein the compound represented by Formula III is at least one compound selected from compounds of Formulae III-a to III-o:

[Formula III-a]

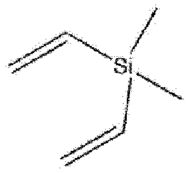

[Formula III-b]

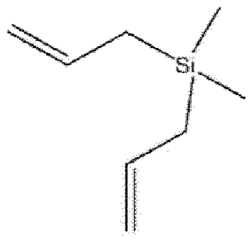

[Formula III-c]

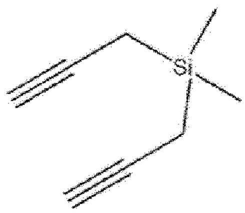

[Formula III-d]

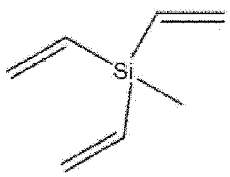

[Formula III-e]

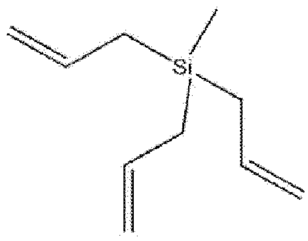

[Formula III-f]

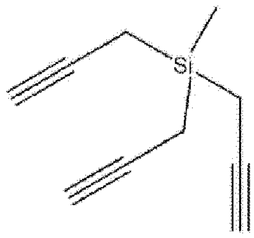

[Formula III-g]

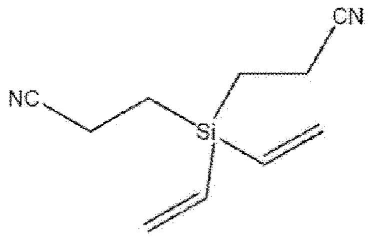

[Formula III-h]

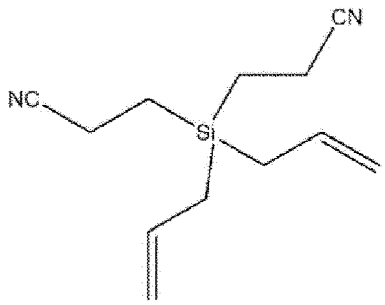

[Formula III-i]

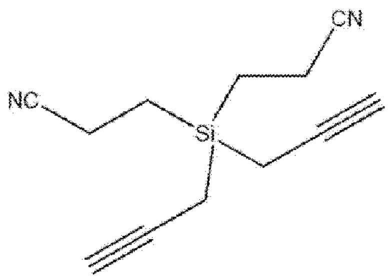

[Formula III-j]

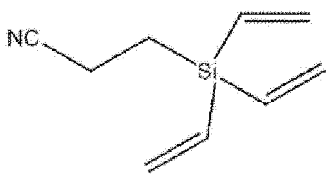

[Formula III-k]

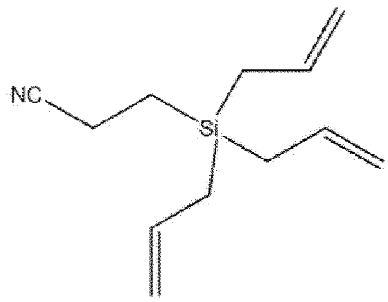

[Formula III-l]

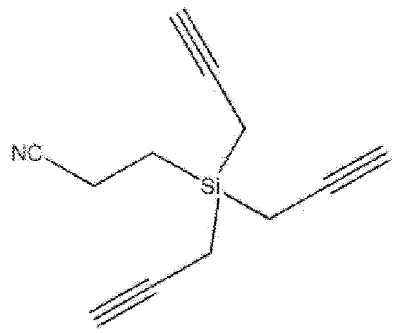

[Formula III-m]

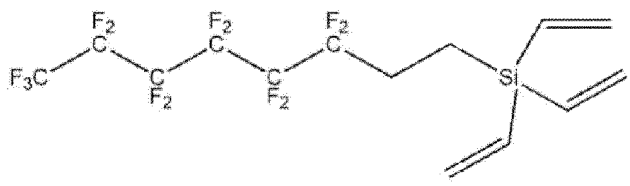

[Formula III-n]

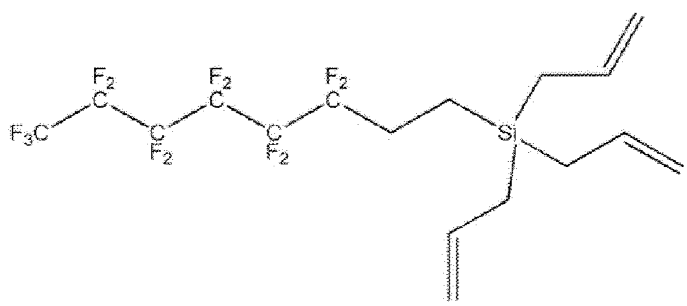

[Formula III-o]

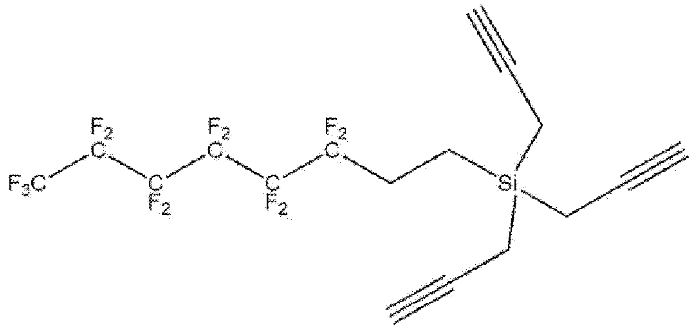

.

**5.** The non-aqueous electrolyte solution of claim 1, wherein the compound represented by Formula IV is at least one compound selected from compounds of Formulae IV-a to IV-c:

[Formula IV-a]

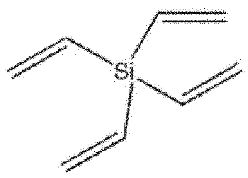

[Formula IV-b]

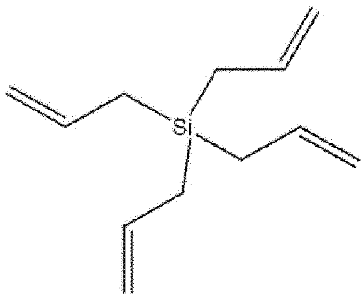

[Formula IV-c]

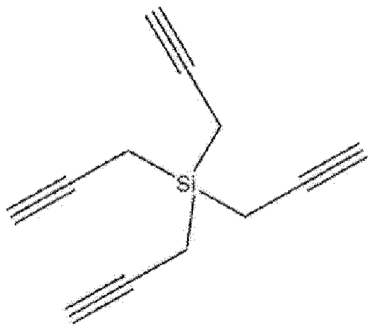

.

**6.** The non-aqueous electrolyte solution of claim 1, wherein the compound represented by Formula V is at least one compound selected from compounds of Formulae V-a and V-b:

[Formula V-a]

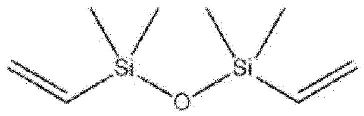

[Formula V-b]

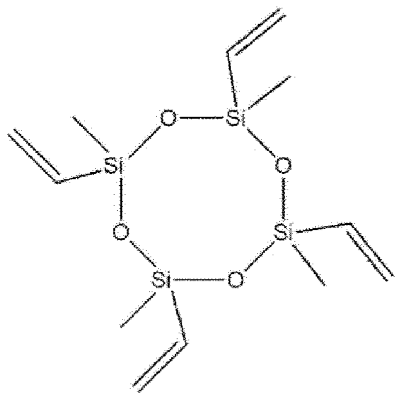

.

7. The non-aqueous electrolyte solution of claim 1, wherein a weight ratio of the compound represented by Formula I to the at least one selected from the compounds represented by Formula II to Formula V is in a range of 1:1 to 100:1.

8. The non-aqueous electrolyte solution of claim 1, wherein the compound represented by Formula I is included in an amount of 0.01 part by weight to 10 parts by weight based on 100 parts by weight of the non-aqueous electrolyte solution.

9. The non-aqueous electrolyte solution of claim 1, wherein the at least one selected from the compounds represented by Formula II to Formula V is included in an amount of 0.01 part by weight to 10 parts by weight based on 100 parts by weight of the non-aqueous electrolyte solution.

10. A lithium secondary battery comprising:

a positive electrode including a positive electrode active material;
a negative electrode including a negative electrode active material;
a separator disposed between the positive electrode and the negative electrode; and
the non-aqueous electrolyte solution of any one of claims 1 to 9.

11. The lithium secondary battery of claim 10, wherein the negative electrode active material is a silicon-based negative electrode active material.

**Patentansprüche**

1. Nichtwässrige Elektrolytlösung, umfassend:

ein organisches Lösungsmittel;
ein Lithiumsalz;
eine Verbindung mit der Formel I; und
mindestens eine Verbindung, ausgewählt aus Verbindungen mit der Formel II bis Formel V:

[Formel 1]

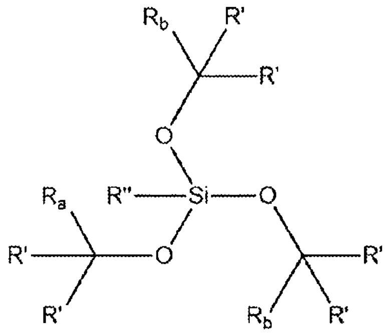

[Formel II]

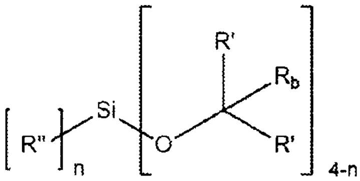

[Formel III]

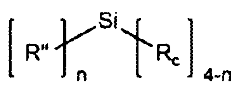

[Formel IV] Si(R")$_4$

[Formel V]

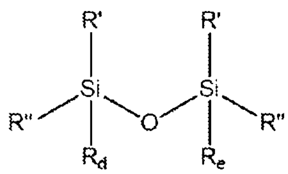

worin, in Formel I bis Formel V,

$R_a$ eine $C_1$-$C_{10}$ Alkylgruppe ist, die mit mindestens einem Fluorelement substituiert ist,

$R_b$ jeweils unabhängig eine $C_1$-$C_{10}$ Alkylgruppe ist, die unsubstituiert oder mit mindestens einem Fluorelement substituiert ist,

$R_c$ jeweils unabhängig eine unsubstituierte oder substituierte $C_1$-$C_{10}$ Alkylgruppe ist,

R' jeweils unabhängig Wasserstoff; eine unsubstituierte oder substituierte $C_1$-$C_{10}$ Alkylgruppe; oder eine unsubstituierte oder substituierte $C_1$-$C_{10}$ Heteroalkylgruppe ist,

R'' eine unsubstituierte oder substituierte $C_2$-$C_{10}$ Alkenylgruppe oder eine unsubstituierte oder substituierte $C_2$-$C_{10}$ Alkinylgruppe ist,

$R_d$ und $R_e$ jeweils unabhängig Wasserstoff, eine unsubstituierte oder substituierte $C_1$-$C_{10}$ Alkylgruppe, eine unsubstituierte oder substituierte $C_1$-$C_{10}$ Heteroalkylgruppe; oder eine unsubstituierte oder substituierte Siloxangruppe sind,

wobei in einem Fall, in dem sowohl $R_d$ als auch $R_e$ Siloxangruppen sind, $R_d$ und $R_e$ miteinander verbunden sind,

um einen Ring zu bilden, der aus einer Siloxanbindung aufgebaut ist, und
n 2 oder 3 ist.

2. Nichtwässrige Elektrolytlösung nach Anspruch 1, wobei die Verbindung mit der Formel I mindestens eine Verbindung ist, ausgewählt aus Verbindungen der Formeln I-a bis I-f:

[Formel I-a]

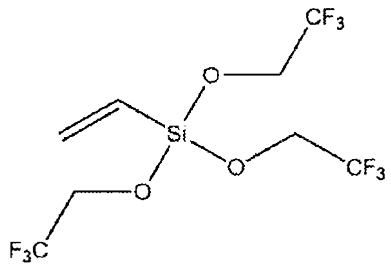

[Formel I-b]

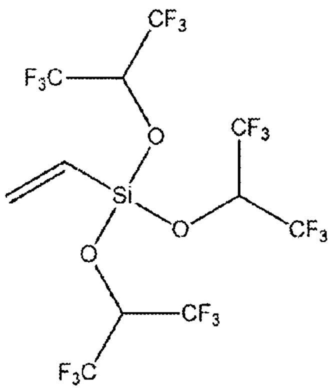

[Formel I-c]

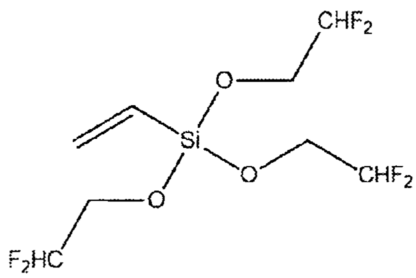

[Formel I-d]

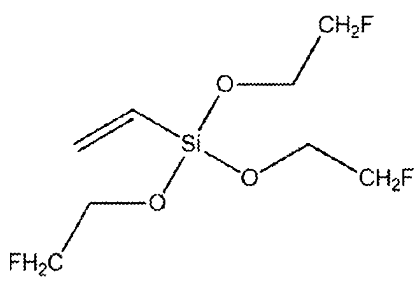

[Formel I-e]

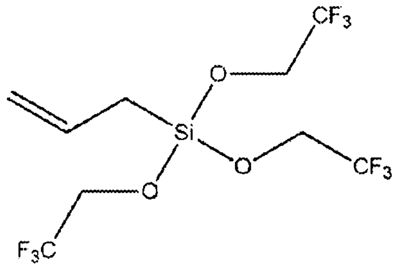

[Formel I-f]

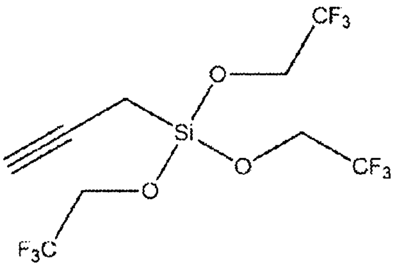

.

**3.** Nichtwässrige Elektrolytlösung nach Anspruch 1, wobei die Verbindung mit der Formel II mindestens eine Verbindung ist, ausgewählt aus Verbindungen der Formeln II-a bis II-f:

[Formel II-a]

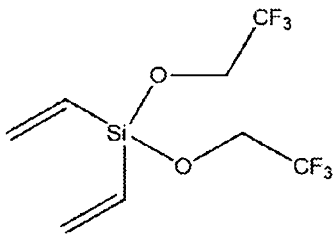

[Formel II-b]

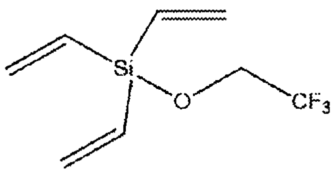

[Formel II-c]

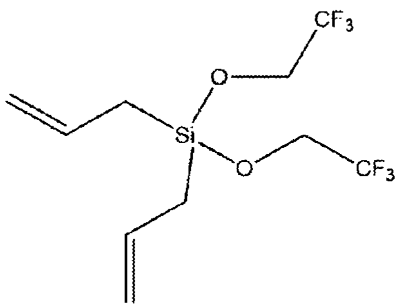

[Formel II-d]

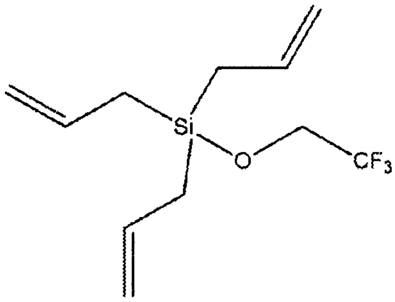

[Formel II-e]

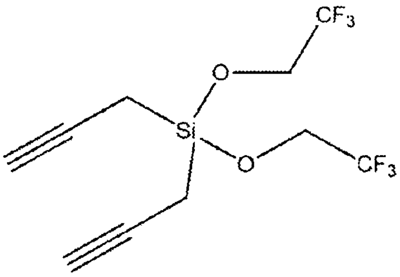

[Formel II-f]

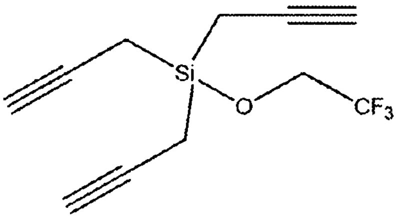

.

4. Nichtwässrige Elektrolytlösung nach Anspruch 1, wobei die Verbindung mit der Formel III mindestens eine Verbindung ist, ausgewählt aus Verbindungen der Formeln III-a bis III-o:

[Formel III-a]

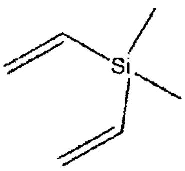

[Formel III-b]

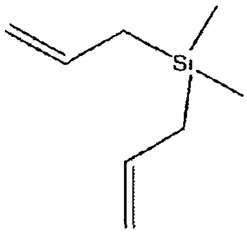

[Formel III-c]

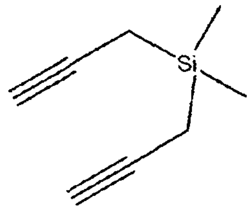

[Formel III-d]

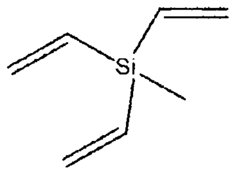

[Formel III-e]

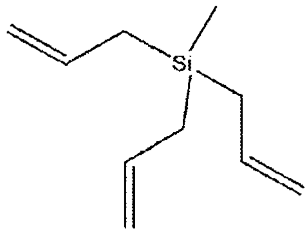

[Formel III-f]

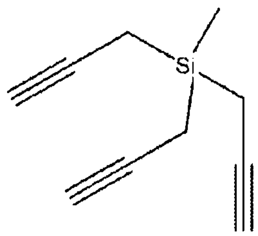

[Formel III-g]

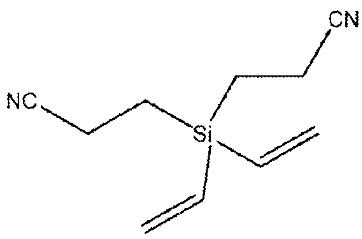

[Formel III-h]

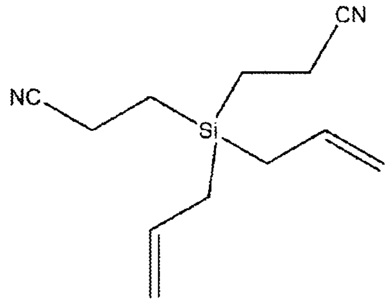

[Formel III-i]

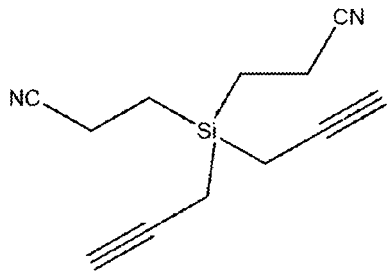

[Formel III-j]

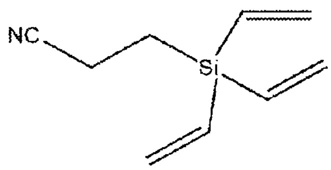

[Formel III-k]

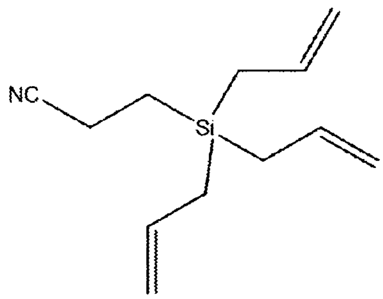

[Formel III-l]

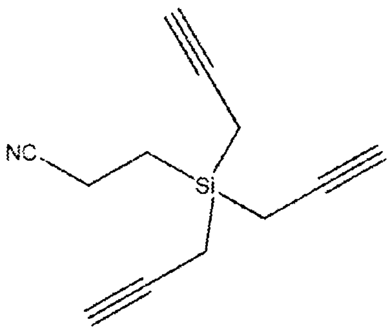

[Formel III-m]

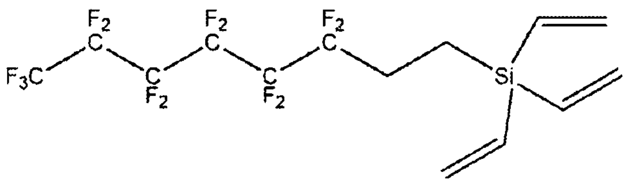

[Formel III-n]

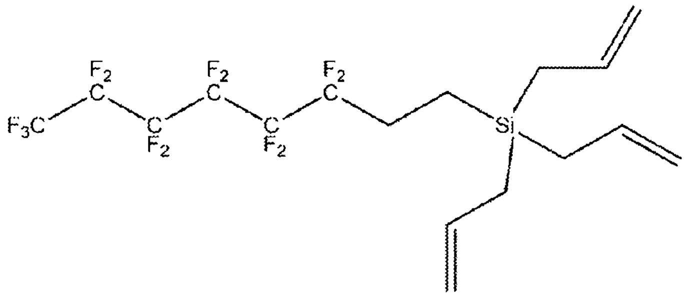

[Formel III-o]

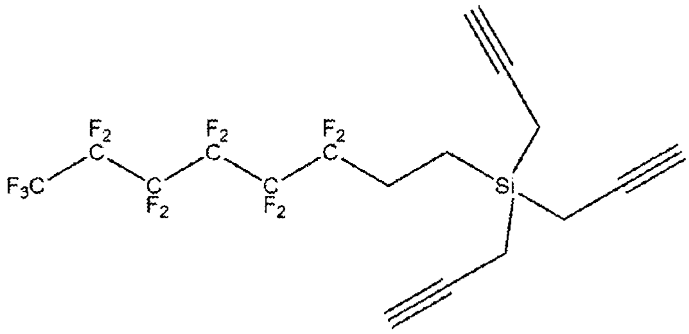

.

5. Nichtwässrige Elektrolytlösung nach Anspruch 1, wobei die Verbindung mit der Formel IV mindestens eine Verbindung ist, ausgewählt aus Verbindungen der Formeln IV-a bis IV-c:

[Formel IV-a]

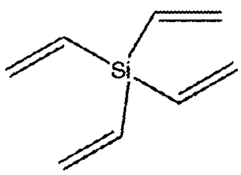

[Formel IV-b]

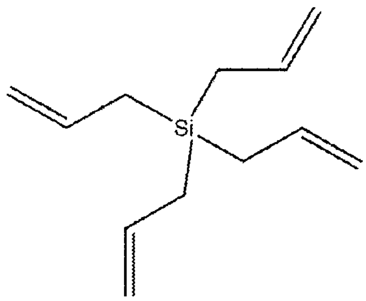

[Formel IV-c]

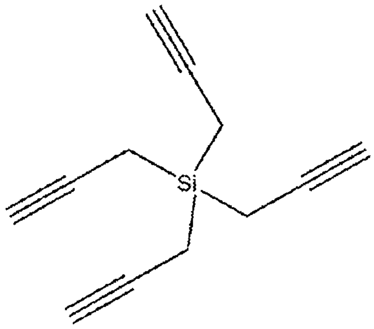

.

6. Nichtwässrige Elektrolytlösung nach Anspruch 1, wobei die Verbindung mit der Formel V mindestens eine Verbindung ist, ausgewählt aus Verbindungen der Formeln V-a und V-b:

[Formel V-a]

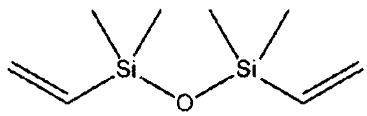

[Formel V-b]

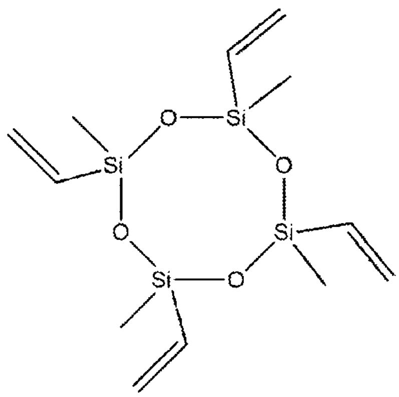

.

7. Nichtwässrige Elektrolytlösung nach Anspruch 1, wobei ein Gewichtsverhältnis der Verbindung mit der Formel I zu der mindestens einen Verbindung, ausgewählt aus den Verbindungen mit der Formel II bis Formel V, in einem Bereich von 1:1 bis 100:1 liegt.

8. Nichtwässrige Elektrolytlösung nach Anspruch 1, wobei die Verbindung mit der Formel I in einer Menge von 0,01 Gewichtsteilen bis 10 Gewichtsteilen, bezogen auf 100 Gewichtsteile der nichtwässrigen Elektrolytlösung, enthalten ist.

**9.** Nichtwässrige Elektrolytlösung nach Anspruch 1, wobei die mindestens eine Verbindung, ausgewählt aus den Verbindungen mit der Formel II bis Formel V, in einer Menge von 0,01 Gewichtsteilen bis 10 Gewichtsteilen, bezogen auf 100 Gewichtsteile der nichtwässrigen Elektrolytlösung, enthalten ist.

**10.** Lithium-Sekundärbatterie, umfassend:

eine positive Elektrode, die ein Positivelektrodenaktivmaterial enthält;
eine negative Elektrode, die ein Negativelektrodenaktivmaterial enthält;
einen Separator, der zwischen der positiven Elektrode und der negativen Elektrode angeordnet ist; und
die nichtwässrige Elektrolytlösung nach midnestens einem der Ansprüche 1 bis 9.

**11.** Lithium-Sekundärbatterie nach Anspruch 10, wobei das Negativelektrodenaktivmaterial ein Negativelektrodenaktivmaterial auf Siliziumbasis ist.

## Revendications

**1.** Solution électrolytique non aqueuse comprenant ;

un solvant organique ;
un sel de lithium ;
un composé représenté par la formule I ; et
au moins un composé choisi parmi les composés représentés par les formules II à V :

[Formule 1]

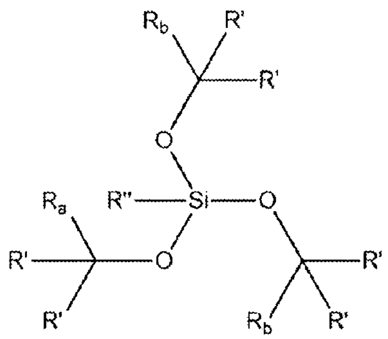

[Formule II]

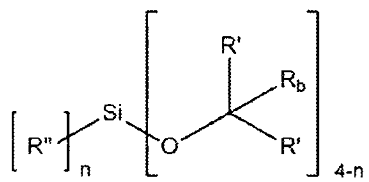

[Formule III]

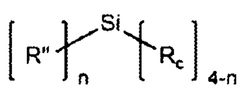

[Formule IV] $Si(R")_4$

[Formule V]

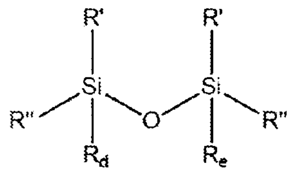

dans lesquelles, dans les formules I à V,

$R_a$ est un groupe alkyle en C1 à C10 substitué par au moins un atome de fluor,

$R_b$ est indépendamment un groupe alkyle en C1 à C10 non substitué ou substitué par au moins un atome de fluor,

$R_c$ est indépendamment un groupe alkyle en C1 à C10 non substitué ou substitué,

R' représente indépendamment un atome d'hydrogène ; un groupe alkyle en C1-C10 non substitué ou substitué ; ou un groupe hétéroalkyle en C1-C10 non substitué ou substitué,

R" est un groupe alcényle en C2-C10 non substitué ou substitué ; ou un groupe alcynyle en C2-C10 non substitué ou substitué,

$R_d$ et $R_e$ sont chacun indépendamment un atome d'hydrogèn ; un groupe alkyle en C1-C10 non substitué ou substitué ; un groupe hétéroalkyle en C1-C10 non substitué ou substitué ; ou un groupe siloxane non substitué ou substitué,

dans lequel, dans le cas où $R_d$ et $R_e$ sont tous deux des groupes siloxane, $R_d$ et $R_e$ sont liés l'un à l'autre pour former un cycle composé d'une liaison siloxane, et n est 2 ou 3.

**2.** La solution électrolytique non aqueuse selon la revendication 1, dans laquelle le composé représenté par la formule I est au moins un composé choisi parmi les composés de formules I-a à I-f :

[Formule I-a]

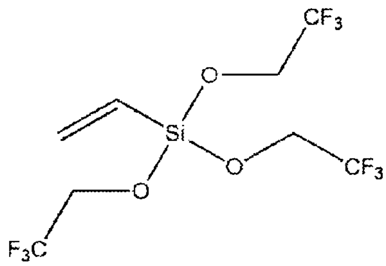

[Formule I-b]

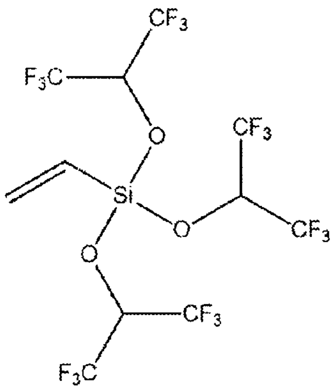

[Formule I-c]

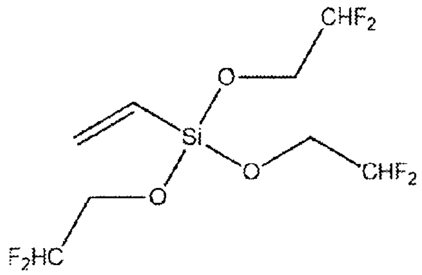

[Formule I-d]

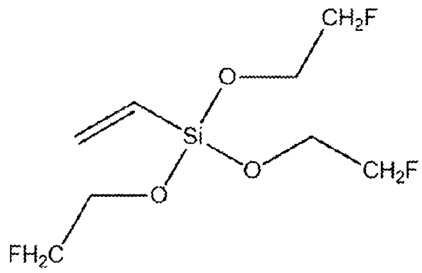

[Formule I-e]

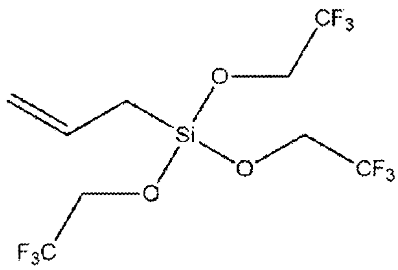

[Formule I-f]

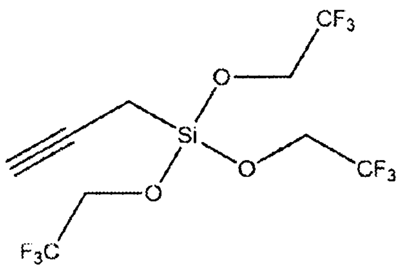

**3.** La solution électrolytique non aqueuse selon la revendication 1, dans laquelle le composé représenté par la formule II est au moins un composé choisi parmi les composés de formules II-a à II-f :

[Formule II-a]

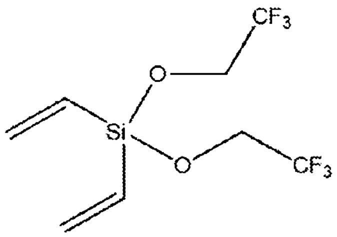

[Formule II-b]

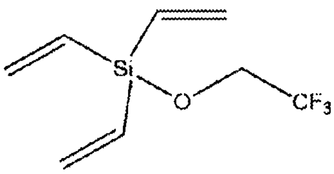

[Formule II-c]

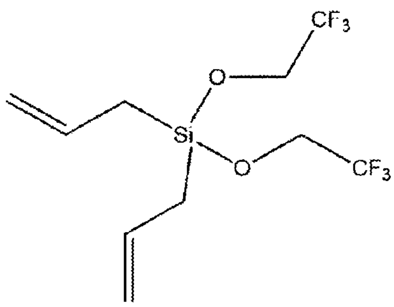

[Formule II-d]

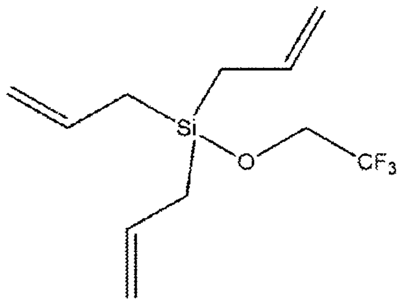

[Formule II-e]

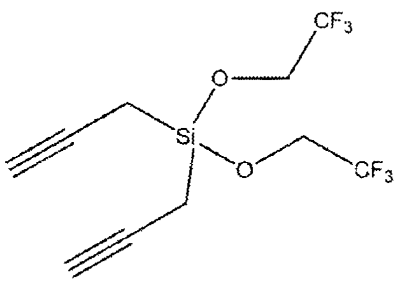

[Formule II-f]

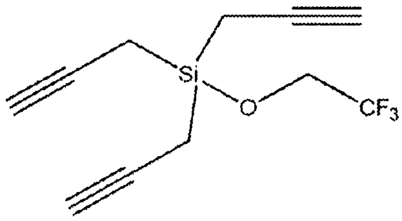

.

4. La solution électrolytique non aqueuse selon la revendication 1, dans laquelle le composé représenté par la formule III est au moins un composé choisi parmi les composés de formules III-a à III-o :

[Formule III-a]

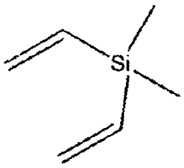

[Formule III-b]

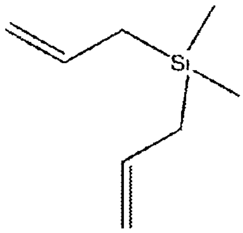

[Formule III-c]

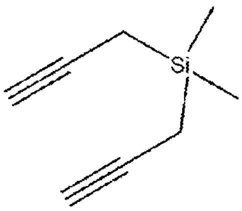

[Formule III-d]

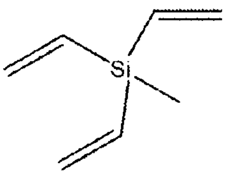

[Formule III-e]

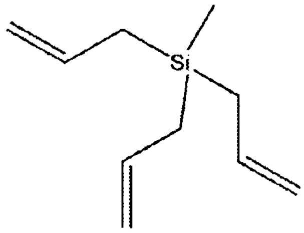

[Formule III-f]

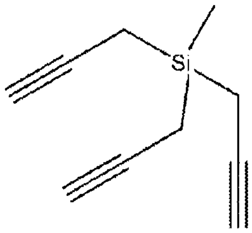

[Formule III-g]

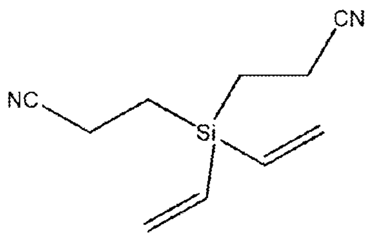

[Formule III-h]

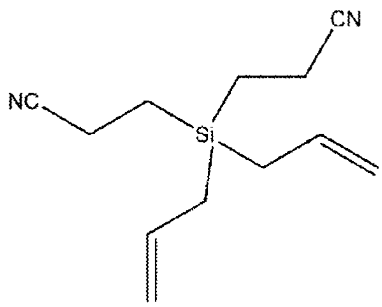

[Formule III-i]

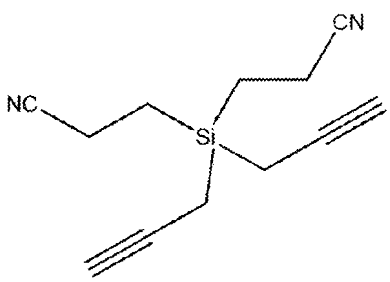

[Formule III-j]

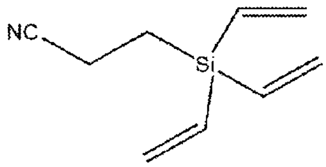

[Formule III-k]

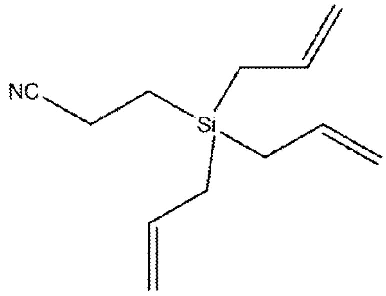

[Formule III-l]

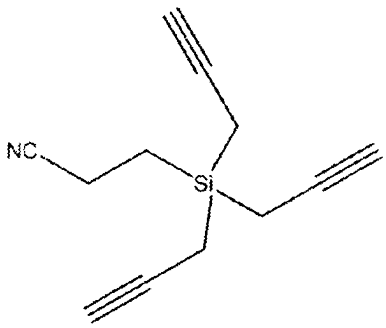

[Formule III-m]

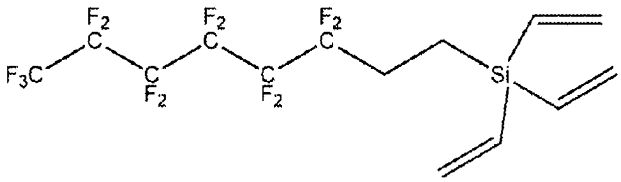

[Formule III-n]

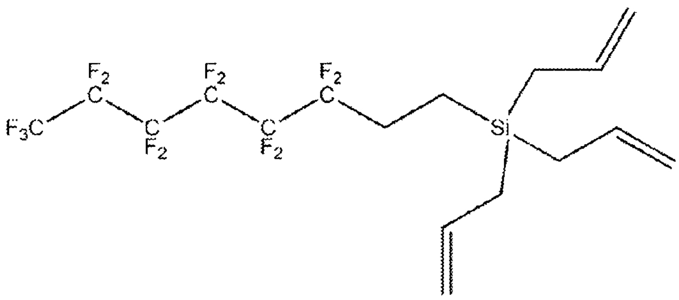

[Formule III-o]

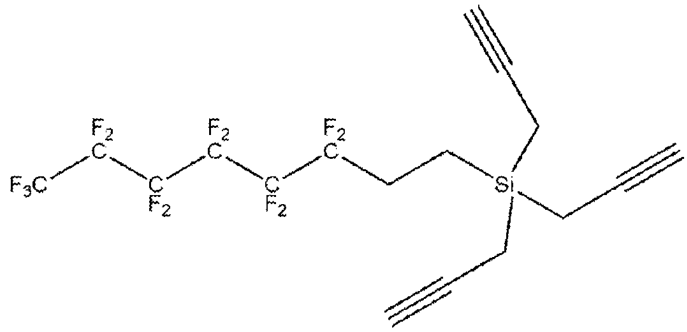

.

5. La solution électrolytique non aqueuse selon la revendication 1, dans laquelle le composé représenté par la formule IV est au moins un composé choisi parmi les composés de formules IV-a à IV-c :

[Formule IV-a]

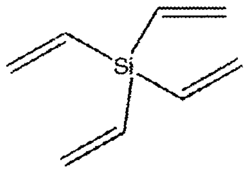

[Formule IV-b]

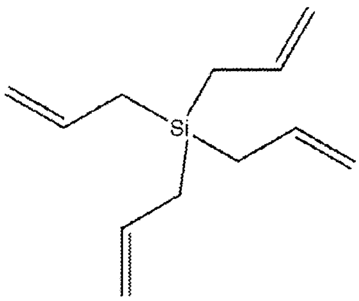

[Formule IV-c]

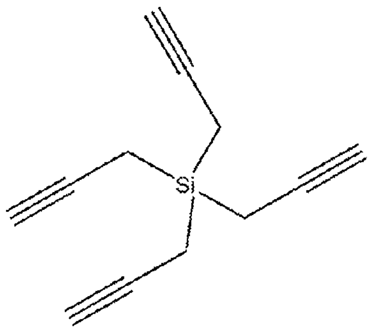

.

6. La solution électrolytique non aqueuse selon la revendication 1, dans laquelle le composé représenté par la formule V est au moins un composé choisi parmi les composés de formules V-a et V-b :

[Formule V-a]

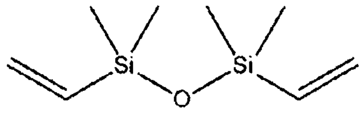

[Formule V-b]

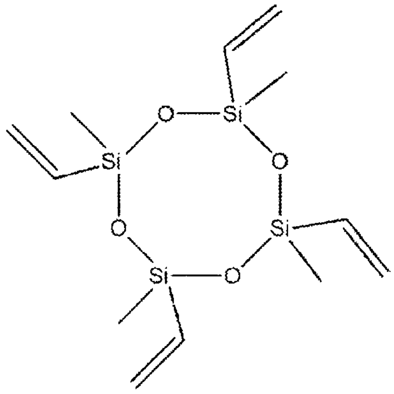

.

**7.** La solution électrolytique non aqueuse selon la revendication 1, dans laquelle le rapport pondéral entre le composé représenté par la formule I et au moins un composé choisi parmi les composés représentés par les formules II à V est dans un domaine de 1:1 à 100:1.

**8.** La solution électrolytique non aqueuse selon la revendication 1, dans laquelle le composé représenté par la formule I est inclus en une quantité de 0,01 partie en poids à 10 parties en poids sur la base de 100 parties en poids de la solution électrolytique non aqueuse.

**9.** La solution électrolytique non aqueuse selon la revendication 1, dans laquelle au moins un composé choisi parmi les composés représentés par les formules II à V est inclus en une quantité de 0,01 partie en poids à 10 parties en poids sur la base de 100 parties en poids de la solution électrolytique non aqueuse.

**10.** Batterie secondaire au lithium comprenant :

une électrode positive comprenant un matériau actif d'électrode positive ;
une électrode négative comprenant un matériau actif d'électrode négative ;
un séparateur disposé entre l'électrode positive et l'électrode négative ; et
la solution électrolytique non aqueuse de l'une quelconque des revendications 1 à 9.

**11.** La batterie secondaire au lithium selon la revendication 10, dans laquelle le matériau actif d'électrode négative est un matériau actif d'électrode négative à base de silicium.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020220094116
- EP 3416229 A1